# EUROPÄISCHE PATENTANMELDUNG

(11) **EP 2 131 086 A2**
(43) Veröffentlichungstag der Anmeldung: **09.12.2009**
(21) Anmeldenummer: 08020084.3
(22) Anmeldetag: 18.11.2008
(51) Int. Cl.: F16L 11/24, F16L 9/21

(54) **Mehrschichtiger Rohrkörper und Verfahren und Vorrichtung zu seiner Herstellung**

(30) Priorität: 21.11.2007 DE 202007016314 U
(71) Anmelder: Bürcher, Friedrich, 82054 Sauerlach (DE)
(72) Erfinder: Bürcher, Friedrich, 82054 Sauerlach (DE)

(57) **Zusammenfassung**

Es werden Rohrkörper wie Rohre und Schläuche und deren Herstllung beschrieben, und zwar Rohrkörper (1) mit mehrschichtiger Rohrwand (2), die mindestens eine Schicht (4) aus einem Funktionsmaterial und mindestens eine Verbindungsschicht (6) enthält, die aus gewendelten, in in Längsrichtung des Rohrkörpers aufeinanderfolgen Windungen umlaufenden Streifen (3,5) bestehen, wobei sich die wendelförmig verlaufenden Streifenränder benachbarter Windungen des Funktionsmaterials unter Bildung einer gewendelten Fuge (7) gegenüberliegen und von zumindest einem Teil der Windungen der Verbindungsschicht überdeckt sind, die jeweils mit den beiderseits der Fuge liegenden Windungen des Funktionsmaterials flächig verbunden sind. Das Funktionsmaterial besteht aus thermisch und/oder akustisch dämmendem Isoliermaterial. Es werden auch Rohrkörper beschrieben, bei denen das Funktionsmaterial und das Material der Verbindungsschicht durch ein beide Funktionen erfüllendes Material (60) zusammengefasst sind. Das Funktionsmaterial kann auch wenigstens einen in der Längsrichtung der Streifen (37) eingebauten elektrischen Leiter (38) und/oder einen mit umlaufenden Kanal (40) enthalten.che

## Beschreibung

Die Erfindung betrifft einen Rohrkörper, worunter Rohre, Schläuche, Lüftungskanäle und dergleichen zu rechnen sind, insbesondere, aber nicht ausschließlich, für den Transport von gasförmigen Medien; und betrifft weiterhin ein Verfahren und eine Vorrichtung zur Herstellung erfindungsgemäßer Rohrkörper.

Zunehmend wird der Vermeidung von Energieverlusten, insbesondere Wärmeverlusten, große Beachtung geschenkt. Hierfür wird eine gute Wärmedämmung gefordert. Die gute Wärmedämmung ist auch speziell an Rohrleitungen wichtig, die warme oder kalte Medien transportieren, beispielsweise Abluftleitungen, die noch einem Wärmetauscher zugeführt werden, Warmwasserleitungen, Gaskanäle in der Industrie und so weiter. Außer der Wärmedämmung ist auch die akustische Dämmung von Interesse.

Nach dem Stand der Technik werden Rohrkörper insbesondere mit Glaswolle isoliert. Ein solches Isolierrohr weist innen einen Trägerkörper auf, auf den die Glaswolle als Isolierschicht aufgebracht ist, die wiederum von einer äußeren Decklage umgeben ist. Dieser Rohraufbau mit einem Innenkörper ist aufwändig und der Umgang mit Glaswolle ist wegen der spezifischen Eigenschaften dieses Materials ungünstig und vorzugsweise zu vermeiden. Es ist bekannt, dass Glaswolle gesundheitsschädlich ist und auch im Umgang damit Hautreizungen hervorgerufen werden. Mittlerweile gibt es weitaus bessere Dämmmaterialien, die aber im besprochenen Sinne technisch nicht zu verarbeiten sind. Um eine bessere Isolation oder Dämmung zu erreichen, müsste das Dämmmaterial im Inneren des Kanals, Schlauchs oder Rohrs eingearbeitet werden. Dies ist, wie erwähnt, aus technischen, maschinellen Gründen bis heute nicht in industriellem Maßstab möglich. Auch ist es bis heute nicht möglich gewesen, Glaswolle im Inneren eines Rohres zu befestigen und einzubauen. Die Glaswolle würde sich mit der Zeit auflösen und in den Räumen verteilen.

Ein wichtiges Herstellungsverfahren von Rohrkörpern, insbesondere Schläuchen, ist das Wickelverfahren, bei dem das Wandmaterial des Rohrkörpers als Streifen zugeführt und wendelförmig um einen Dom oder entlang einer Führung gewickelt wird, wobei jeweils aneinanderstoßende Windungen der Wendel an ihren Rändern miteinander verbunden werden. Auf diese Weise können auch mehrschichtige Rohrkörper hergestellt werden, beispielsweise beschreibt die deutsche Patentschrift 1236769 die Herstellung eines Schlauchs aus einerseits einem zugeführten profilierten Wandmaterial und andererseits einer über die Fugen zwischen den Windungen gewickelten Klebefolie. Auf diese Weise kann jedoch kein durch eine innere Glaswolleschicht isolierter Rohrkörper hergestellt werden, da das Glaswollematerial nicht entsprechend gewickelt oder in das Innere eines Rohrkörpers eingebracht werden kann. Der Einbau von anderen, profilierten oder nicht profilierten Dämmmaterialien ist im Stand der Technik ebenfalls nicht bekannt.

Außer Dämmmaterialien oder zusätzlich zu Dämmmaterialien in der Rohwand ist es auch oft erwünscht, Rohrwandmaterialien zu wickeln, die spezielle Profile haben und insbesondere elektrische Leiter enthalten, die mit dem Rohr, dem Schlauch bzw. dem Kanal mitlaufen sollen.

Gegenstand der Erfindung ist nun ein Rohrkörper mit mehrschichtiger Rohrwand, die mindestens eine Schicht aus einem Funktionsmaterial und ggf. mindestens eine Verbindungsschicht enthält, die aus gewendelten, in in Längsrichtung aufeinanderfolgen Windungen umlaufenden Streifen oder Bändern bestehen, wobei sich die wendelförmig verlaufenden Streifenränder benachbarter Windungen des Funktionsmaterials unter Bildung einer gewendelten Fuge gegenüberliegen und von zumindest einem Teil der Windungen der Verbindungsschicht überdeckt sind, die jeweils mit den beiderseits der Fuge liegenden Windungen des Funktionsmaterials flächig verbunden sind,. Die Erfindung betrifft die Tatsache, dass das Funktionsmaterial ein thermisch und/oder akustisch dämmendes Isoliermaterial ist, dessen Streifen profiliert oder unprofiliert sein können, und/oder dass er es wenigstens einen in der Längsrichtung der Streifen eingebauten elektrischen Leiter enthält. Die Erfindung ist insbesondere in Fällen mit Vorteil anwendbar, in denen das Material der Verbindungsschicht aus gewellter Metallfolie oder Blech, sogenanntem Wickelfalzmaterial, besteht. Von beiden Materialien kann jeweils ein einziger Streifen, oder können mehrere Streifen gewendelt aufgewickelt werden, mehrere Streifen beispielsweise in Form einer zweigängigen Wendel oder unter Bildung mehrerer Schichten des jeweiligen Materials. Wenn im Folgenden von den Streifen in der Mehrzahl die Rede ist, soll die Ausführung mit nur einem Streifen eines oder beider Materialien mit umfasst sein.

Als thermisch und/oder akustisch dämmendes Isoliermaterial gibt es, wie gesagt, Materialien, die wesentlich günstiger sind als Glaswolle und die in Form langer Streifen zur Verfügung gestellt werden können. Es lassen sich also erfindungsgemäß gebildete Rohrkörper herstellen, die wahlweise innen oder außen oder sowohl innen als auch außen das Isoliermaterial haben und die durch die Verbindungsschicht von Windung zu Windung zusammengehalten werden, nämlich z. B. geklebt, geschweißt oder formschlüssig zusammengekoppelt sind. Durch das Wickeln des Schlauchs mit Isoliermaterialstreifen lassen sich isolierte Schläuche, Rohre oder Kanäle herstellen, die über die übliche Länge praktisch wärmeverlustfrei sind und damit der Erfordernis des Energiesparens erheblich entgegengekommen. Als Beispiel seien Passivhäuser oder Niedrigenergiehäuser genannt. In der entsprechenden Installation steigt Luft auf und wird vom Dachgeschoss als warme Luft über eine Filterung und über isolierende Rohre mit einem Mantel z. B. aus Kupfer ohne Wärmeverlust wieder nach unten in das Erdgeschoss transportiert und in den einzelnen Räumen verteilt. Dieser Vorgang wiederholt sich immer wieder, mit der Folge einer Energieeinsparung in erheblichem Ausmaß. Bei einer anderen Installation, mit Wärmepumpe, wird Erdwärme gespeichert und über isolierende Luftleitungen und über eine Temperatur-Luftsteuerung im Gebäude verteilt, mit der Folge eines geringen Heizenergieverbrauchs. Der Einsatz der erfindungsgemäßen Rohrkörper verspricht Öko-Wärmetransport der Zukunft, universell einsetzbar in Kälte- und Wärmetechnik, Erdwärmetransport, Solarwärme, Wärmepumpentechnik, und er zeichnet sich aus durch einfache Verlegung in Wänden, Böden, Decken, Brüstungen, Aufputz, Unterputz oder frei. Sie können universell überall eingesetzt werden, wo Gas jeder Art, z. B. Luft, bewegt wird. Spezielle Beispiele, die die Vielfältigkeit der Anwendungsmöglichkeiten veranschaulichen, sind z. B. Zeltbeheizung oder Flugzeugbau. Außer dem Vorteil, dass es keinen Energieverlust mehr gibt, hat man z. B. bei Heißluft, Abluft, Umluft noch die Vorteile eines geräuschlosen Lufttransports und einer absoluten Dichtigkeit. Es ist sowohl Wärme- als auch Kältetransport möglich, die Rohrkörper können so gebaut werden, dass aufgrund einer glatten Innenfläche kein Abrieb erfolgt. Für die Schläuche, Rohre usw. ist eine einfache Montage möglich.

Die Verwendung des Isoliermaterials als Innenschicht ist bei den erfindungsgemäßen Rohrkörpern dann zu bevorzugen, wenn außer der thermischen auch eine akustische Dämmung angestrebt wird. Der Kanal aus den erfindungsgemäßen Rohrkörpern ist im Küchenbereich ein optimales Produkt, weil durch ihn der Geräuschpegel von der Dunsthaube bis zu 80 % gemindert wird und gleichzeitig keine Kondenswasserbildung mehr erfolgt. Für rechteckige Luftkanäle gibt es Übergangsstücke von rund auf rechteckig, T-Stücke, Umlenkstücke usw. Beim Biegen der Kanäle bekommt man langgezogene Bögen, die lufttechnisch Vorteile bringen.

Außer der Isolierung oder zusätzlich hierzu ermöglicht die Erfindung, speziell bei Funktionsmaterialstreifen mit einem Längsprofil, den Einbau eines oder mehrerer elektrischer Leiter, die insbesondere Stromspeisekabel, Nachrichtenkabel, Heizleiter oder Temperaturmessleiter sein können. Hierdurch ergeben sich zusätzliche Verwendungsmöglichkeiten der aus den Rohrkörpern aufgebauten Leitung, beispielsweise kann im Fall einer Entlüftungsleitung die Stromspeisung für ein am Leitungsende angebautes Lüfteraggregat vorgesehen seien, oder kann mit endlos eingearbeitetem Flach-Heizband eine Kanalheizung z.B. über Solarstrom gespeist sein. Die Leiter sind in den Rohrkörpern des Kanals eingearbeitet und können untereinander von Rohrkörper zu Rohrkörper mit einem Stecker verbunden werden. Temperaturfühler für Wärmeverbrauch und Tagesverbrauch können ebenfalls installiert sein. Die erfindungsgemäßen Kanäle oder Rohre können auch mit Ausblasgittern bzw. Ausblaslöchern versehen sein, um temperierte Luft auszublasen, oder mit Ausblaslöchern und Filtermaterial, um gefilterte Luft auszublasen.

Insbesondere für Isolierzwecke ist es vorteilhaft, wenn die Streifen des Funktionsmaterials zumindest den größten Teil der Schlauchinnenseite bilden, und vorzugsweise, wenn die Windungen des streifenförmigen Funktionsmaterials an den Fugen sich berührend aneinanderliegen. Es entstehen dann keine Wärmeübergangszonen an der Verbindungsschicht, da diese dadurch gegenüber dem Innenraum weitgehend abgeschirmt ist, was auch von Bedeutung sein kann, wenn sie nicht temperaturbeständig oder gegenüber dem transportierten Medium chemisch empfindlich ist. Hierbei ist es auch vorteilhaft, wenn die Windungen des Funktionsmaterials in einem Winkel von vorzugsweise 45 ° im Längsschnitt aneinanderliegen, wodurch die Empfindlichkeit der Windungsfugen gegen eine Biegung des Rohrkörpers verringert ist. Gemäß einer speziellen Ausbildung können die Fugen zwischen den Windungen des streifenförmigen Funktionsmaterials aber auch Nuten bilden, indem die Streifenränder bei gerader Ausrichtung des Rohrkörpers im Abstand voneinander angeordnet sind. Hierdurch können spezielle Funktionen ermöglicht werden, beispielsweise, dass im Bereich dieser Nuten Öffnungen für den Hindurchtritt des Mediums geschaffen sind. Außerdem können in der außen befindlichen Verbindungsschicht Durchtrittslöcher ausgebildet sein. Für eine solche Durchlässigkeit der Rohrwandung nach außen können die Windungen der Verbindungsschicht auch zumindest bereichsweise mit gegenseitigem Abstand unter Bildung von Durchtrittsbereichen angeordnet sein

Es stellt eine zweckmäßige Ausführung dar, wenn die Verbindungsschicht aus einem steifen, unter Kraftaufwand bleibend verformbaren Material besteht und die Windungen der Verbindungsschicht durch ineinandergreifende Materialformungen verbunden sind. Solche Materialformungen lassen sich in einer Schlauchwickelmaschine am einlaufenden Streifen ausbilden. Wiederum stellt es eine besondere Ausführung dar, wenn zwischen die Windungen des Funktionsmaterials Falten der Verbindungsschicht hineinragen. Soll das aus den Rohrkörpern gebildete Rohr gebogen werden, so dehnen sich dann an der Biegungsaußenseite die Falten. Diese Konstruktion ist insbesondere dann beachtlich, wenn die Verbindungsschicht aus einem steifen gewellten Material wie beispielsweise gewelltem Metallblech besteht, dessen Windungen durch überlappende Materialstreifen miteinander verbunden werden und diese Überlappungsstreifen ineinandergreifende gestauchte Wellungen enthalten. Solche gewellten Materialien können speziell gewellte Wickelfalzmaterialien sein. Hinsichtlich der Verbindung der Windungen wird aber auch die Maßnahme für zweckmäßig gehalten, dass die Streifen der Verbindungsschicht auf die Streifen des Funktionsmaterials aufgeklebt oder, was bei bestimmten Werkstoffen möglich ist, aufgeschweißt sind.

Die Erfindung bezieht sich auch auf Rohrkörper mit einer Rohrwand, bei denen die Verbindungsschicht und die Schicht aus dem Funktionsmaterial als eine einzige Schicht zusammengefasst sind, die aus gewendelten, in in Längsrichtung aufeinanderfolgen Windungen umlaufenden Streifen besteht, wobei die wendelförmig verlaufenden Streifenränder benachbarter Windungen des Schichtmaterials unter Bildung einer Fuge oder eines Überlappungsbereichs miteinander flächig verbunden sind, und wobei das Schichtmaterial ein thermisch und/oder akustisch dämmendes Isoliermaterial ist, das zusätzlich wenigstens einen in der Längsrichtung der Streifen eingebauten elektrischen Leiter enthalten kann. Die Streifen sind in diesem Fall an ihren Rändern unmittelbar miteinander verbunden, insbesondere verklebt oder z.B. durch Heißluftverschweißung verschweißt. Das Funktionsmaterial, ob mit oder ohne Verbindungsstreifen verarbeitet, kann zumindest über einen Teil der Streifenbreite ein Wellenprofil oder ein Zickzackprofil haben, oder kann zumindest über einen Teil der Streifenbreite auf zumindest einer der Streifen-Hauptflächen ein gerades Profil haben. Eine bevorzugte Ausführung besteht hierbei darin, dass an den Streifenrändern beiderseits komplementäre Verbindungsprofile wie z.B. komplementäre Stufen vorhanden sind und diese Verbindungsprofile benachbarter Windungen des Schichtmaterials miteinander verklebt oder verschweißt sind. Für die mechanische Festigkeit des Rohrkörpers, insbesondere Schlauchs, ist zweckmäßigerweise noch im Schichtmaterial wenigstens ein in der Längsrichtung der Streifen verlaufender Kanal ausgebildet, in den ein Draht eingelegt ist und der für den Draht über seine gesamte Länge über eine Nut, durch die der Draht eingezogen worden ist, mit einer der Hauptflächen des Streifens verbunden ist. Nach einer weiteren speziellen Ausbildung ist im Funktionsmaterial wenigstens ein in der Längsrichtung der Streifen verlaufender, eine Biegedehnung der die Nut enthaltenden Hauptfläche des Funktionsmaterialstreifens ermöglichender Einschnitt vorhanden, der eine bogenförmige Verlegung des Rohrkörpers erleichtert.

Im Rahmen der Erfindung werden die Rohrkörper im Wickelverfahren so hergestellt, dass die zwei oder mehr Materialstreifen entweder getrennt an in einer Wickelstation aufeinanderfolgenden Stellen des sich bildenden Wickelkörpers zugeführt und als zwei- oder mehrlagige Rohrkörperwand zusammengeklebt oder zusammengeschweißt werden, wobei sie jeweils einen wendelförmigen Verlauf annehmen und benachbarte Windungen zumindest eines der Streifen an dessen Rändern miteinander verbunden werden; oder dass die Materialstreifen schon in einer früheren Fertigungsstufe zusammengeklebt oder zusammengeschweißt und nur zur Wendel gewickelt und verbunden werden.

Es können auch verschiedene Varianten in einem Stück gefertigt werden, wie z.B. ein 5 m-Stück bestehend aus einem 2 m-Isoliermaterialstreifen, 1 m-Stück mit Ausblaslöchern und wieder 2 m-Isolierstoffstreifen. Es ist auch möglich, mehrere Bänder nebeneinander einzuarbeiten, um eine bessere Biegung zu ermöglichen. Für die Verbindung benachbarter Windungen gibt es verschiedene Verschlusstechniken, z. B. können Wickelfalz-Windungen verklammert und gestaucht werden. Die Kanäle oder Rohre können auch nach der Verklammerung zusammengestaucht werden, somit ist eine durchgehende Dämmung und Isolierung innen wie außen gewährleistet. Beim Biegen wird die Stauchung ein klein wenig geöffnet. Aluminium-Wickelfalz-Bänder können auch in verschiedenen Farben gefertigt werden, z.B. außen weiß, innen schwarz.

Man kann zum einen bei der Fertigung eines erfindungsgemäßen Rohrkörpers, kurz bevor das runde Rohr entsteht, ein Isolierstoff-Band mit einer Breite von z.B. 25 mm und einer Stärke von 5 bis 10 mm auf das schon gewickelte Wickelfalzband, das z. B. aus Aluminium besteht, aufkleben. Das gerillte Band zieht dann das Isolierstoff-Band in einem gleichzeitigen Klebeverfahren mit in die innere Hülle des Rohrkörpers. Anschließend wird der Rohrkörper für die Dichtigkeit verklammert oder verklebt, bis er endgültig seine richtige Form und Stabilität erhält. Das Isolierstoff-Band kann außen oder innen oder außen und innen eingearbeitet werden. Wird das Isolierstoff-Band zusammen mit dem gerillten Wickelfalz-Band vorgefertigt und auf große Rollen gespult, dann muss es an der Maschine nur noch den Vorgang des Verklammerns oder Verklebens durchlaufen. Vorteil hierbei ist: Man kann schneller produzieren, da die Fertigung in zwei Etappen erfolgt.

Bei flexiblen Schläuchen aus flexibler Folie als Verbindungsmaterial, wie z. B. PVC-, PU- usw. Folie, Alupapier usw. gilt der gleiche Vorgang, wobei das Isolierstoff-Band bereits auf der Folie aufgeklebt sein kann. Es wird dann lediglich bei der Schlauchherstellung ein Draht oder ein Stahlband mit eingeführt und anschließend verklebt oder verschweißt. Das Band kann über die ganze Breite, punktweise oder auch linienweise verklebt werden.

Der Durchführung dieser Herstellungsverfahren dient eine Vorrichtung zum Herstellen des Rohrkörpers, mit einem Wickelkopf, dem die streifenförmigen Materialien zugeführt werden und der sie in Windungen legt und die Windungen und verbindet, wobei im Zuführbereich zum Wickelkopf zusammenwirkende parallelachsige Transportrollen angeordnet sind, durch deren Spalt die streifenförmigen Materialien laufen, und die Transportrollen ein dem Profil der streifenförmigen Materialien angepasstes Rollenprofil aufweisen. Für die Verarbeitung von in bereits miteinander verbundenem Zustand zugeführten streifenförmigen Materialien, nämlich Funktionsmaterial und Material der Verbindungsschicht, hat dabei wenigstens eine der Rollen, nämlich die auf der Seite des schmaleren Streifens, ein Stufen-Rollenprofil, so dass die Transportrolle für den schmaleren Streifen eine Vertiefung hat, die sein Hindurchbewegen ermöglicht, und für die Verarbeitung von in nicht bereits miteinander verbundenem Zustand zugeführten streifenförmigen Materialien weist die Vorrichtung entsprechend der Zahl der zugeführten streifenförmigen Materialien mehrere Sätze von Transportrollen auf.

Gemäß einer Weiterbildung der Vorrichtung zum Herstellen des Rohrkörpers kann der Wickelkopf in seiner Höhe über einer Basis verstellbar sein, was dem Zweck dient, Rohrkörper unterschiedlicher und auch größerer Durchmesser zu wickeln, für die dann zwischen dem Wickelkopf und der Basis noch ausreichend Raum geschaffen werden kann. Bevorzugt ist sein Drehzentrum entlang einer schrägen Bahn höhenverstellbar, und zwar so, dass zwei Tangenten an den in der Herstellung begriffenen Rohrkörper, nämlich die Basis und eine Rahmenlinie, für alle Rohrkörper-Durchmesser die selben sind.

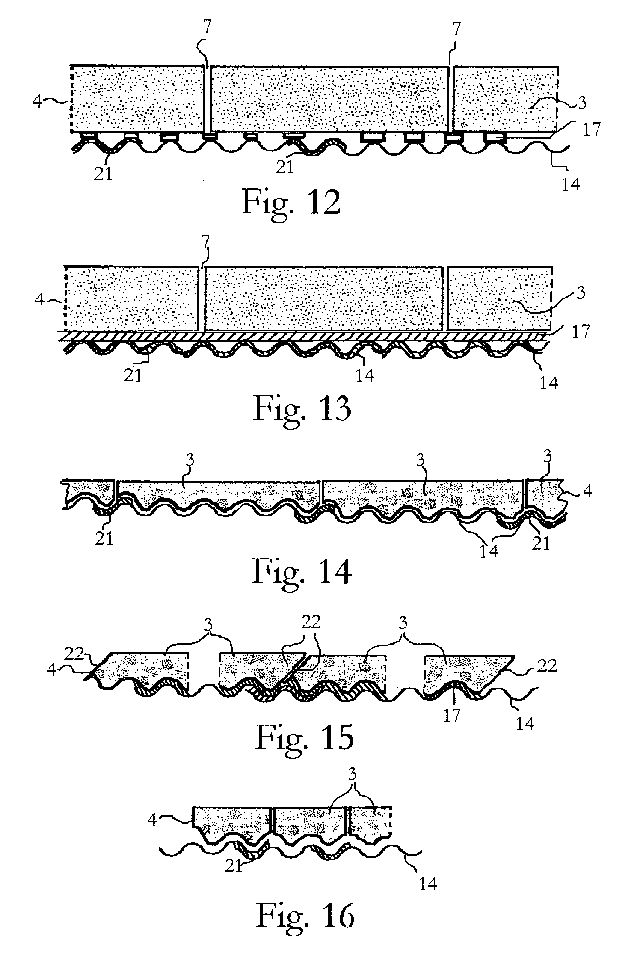

Die Erfindung wird im Folgenden anhand mehrerer bevorzugter Ausführungsbeispiel beschrieben, die die genannten und weitere Charakteristiken der Erfindung erkennen lassen. Die folgende Beschreibung nimmt Bezug auf die Zeichnungen, die in schematischer Weise das Herstellungsverfahren der Rohrkörper, deren Aufbau und deren Wandquerschnitt zeigen. In der Zeichnung sind die Merkmale der Erfindung anhand der folgenden Darstellungen veranschaulicht:
Fig. 1 zeigt das Prinzip der Herstellung eines gewendelten zweilagigen Schlauchs mit innenliegender Isolierschicht, aus zwei Materialstreifen;
Fig. 2 zeigt die Herstellung des zweilagigen Schlauchs mit außenliegender Isolierschicht, aus zwei Materialstreifen;
Fig. 3 zeigt die Herstellung des zweilagigen Schlauchs mit innenliegender Isolierschicht, aus einem bereits vorverklebten zweilagigen Materialstreifen;
Fig. 4 zeigt die Herstellung des zweilagigen Schlauchs mit außenliegender Isolierschicht, wiederum aus einem bereits vorverklebten zweilagigen Materialstreifen;
Fig. 5 zeigt die Herstellung eines dreilagigen Schlauchs mit einer außenliegenden und einer innenliegenden Isolierschicht;
Fig. 6 zeigt die Herstellung eines zweilagigen Schlauchs oder Rohrs mit einem Wickelfalzmaterial als Verbindungsschicht;
Fig. 7 zeigt abweichende erfindungsgemäß hergestellte Rohrkörperformen;
Fig. 8 veranschaulicht anhand der Darstellung aufeinanderfolgender Verarbeitungsschritte die Herstellung eines zweilagigen gewendelten Schlauchs oder Rohrs mit Wickelfalzmaterial und Klemmverschlüssen zwischen den Windungen;
Fig. 9 zeigt im Längsschnitt an der Biegungsaußenseite die Schlauchwand des nach Fig. 7 hergestellten Schlauchs im Fall einer Biegung;
Fig. 10 zeigt die Herstellung eines zweilagigen gewendelten Schlauchs mit Wickelfalzmaterial als Verbindungsschicht mit anderer Art der Verklebung als beim Schlauch nach Fig. 6;
Fig. 11 zeigt eine Variante zur Herstellung nach Fig. 10;
Fig. 12 zeigt anhand eines Querschnitts entsprechend dem in Fig. 1 unten dargestellten Wandquerschnitt eine andere Art der Verbindung der Windungen des Wickelfalzmaterials;
Fig.n 13 bis 18 zeigen anhand von Querschnitten entsprechend Fig. 12, also an dem in Fig. 1 unten dargestellten Wandquerschnitt, unterschiedliche mögliche Wandstrukturen des Rohrkörpers;
Fig.n 19 und 20 zeigen in einer Darstellungsweise entsprechend Fig. 8 die Herstellung wieder andere Rohrkörperstrukturen;

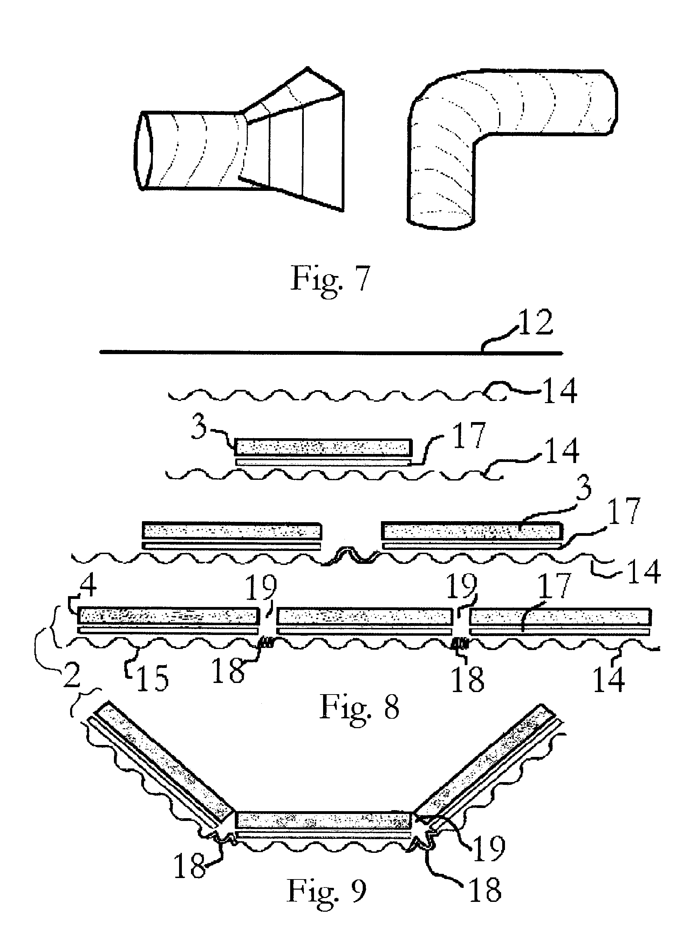

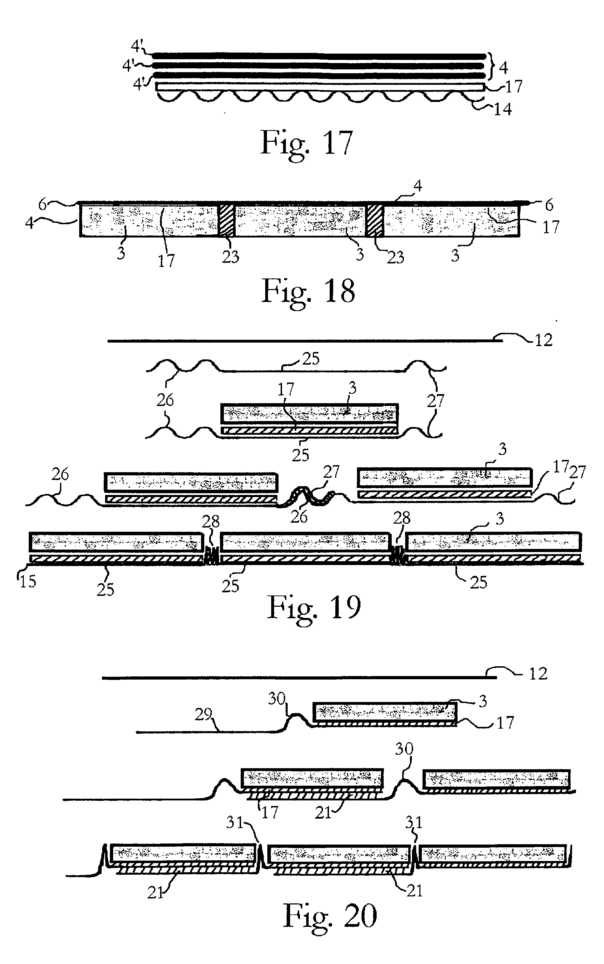

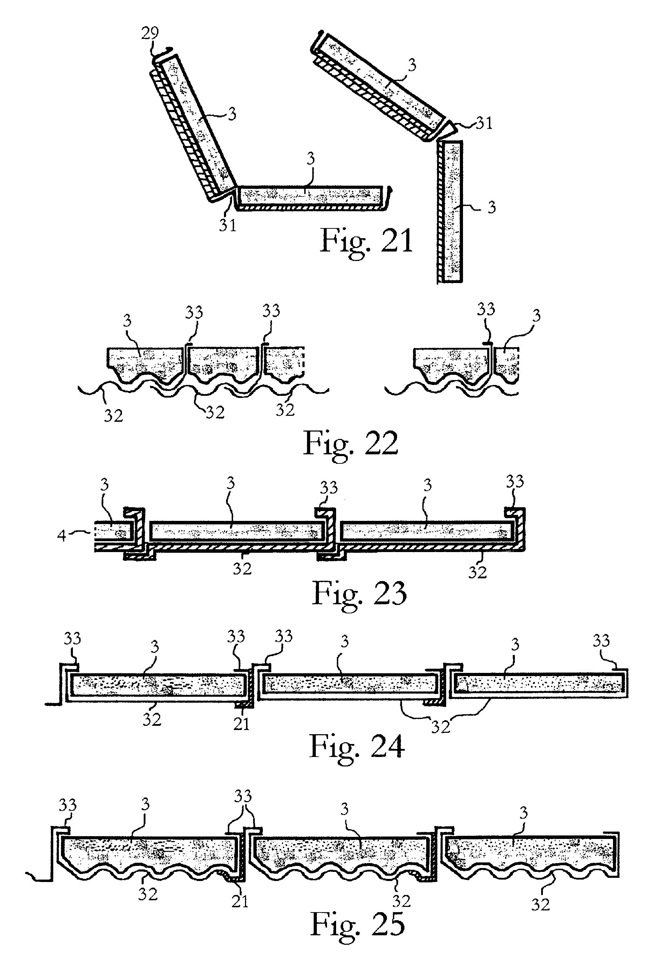

Fig. 21 zeigt in einer Darstellung entsprechend Fig. 9 einen Querschnitt benachbarter Windungen des gebogenen Rohrkörpers von Fig. 20 an dessen Biegungsaußenseite;
Fig.n 22 bis 26 zeigen in Darstellungen entsprechend Fig. 12 unterschiedliche Querschnitte des streifenförmigen Verbindungsmaterials im hergestellten Rohrkörper;

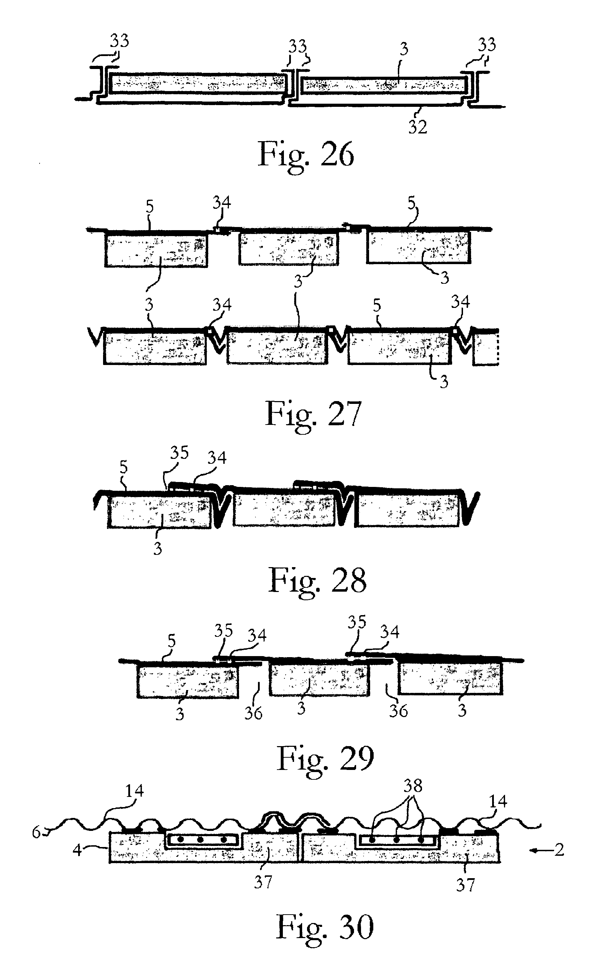

Fig. 27 zeigt zwei aufeinanderfolgende Schritte des Herstellungsverfahrens eines Rohrkörpers mit wendelförmig mit eingebautem Draht;
Fig.n 28 und 29 zeigen Querschnittsansichten entsprechend Fig. 27 mit abgewandelter Lage des Drahts;
Fig. 30 zeigt einen Querschnitt entsprechend Fig. 12 mit profilierten Streifen als Funktionsmaterial und darin eingebauten elektrischen Leitern;

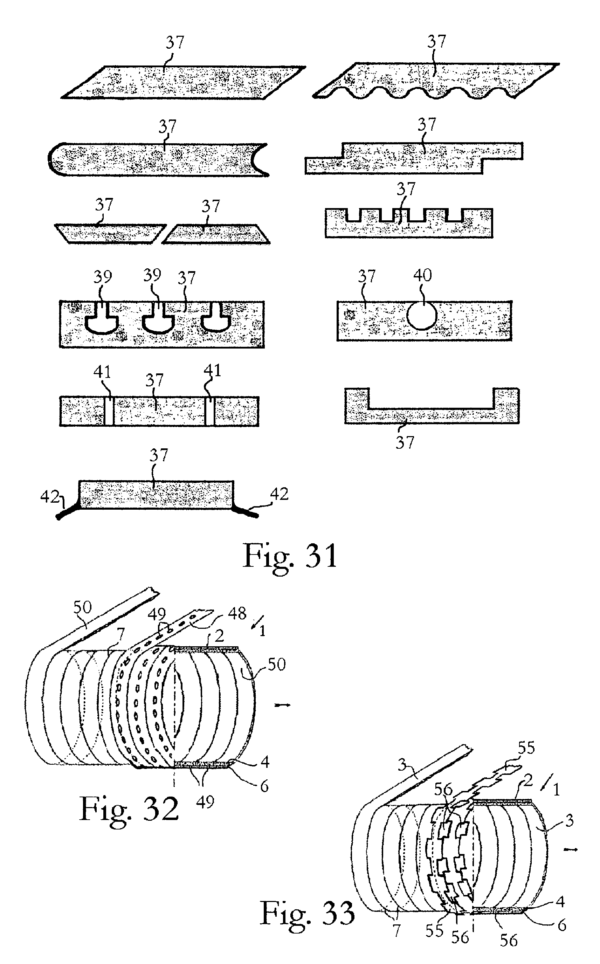

Fig. 31 zeigt verschiedenen Strukturen von Profilstreifen für die Funktionsmaterial-Windungen zur Erstellung von Rohrkörpern entsprechend Fig. 30;

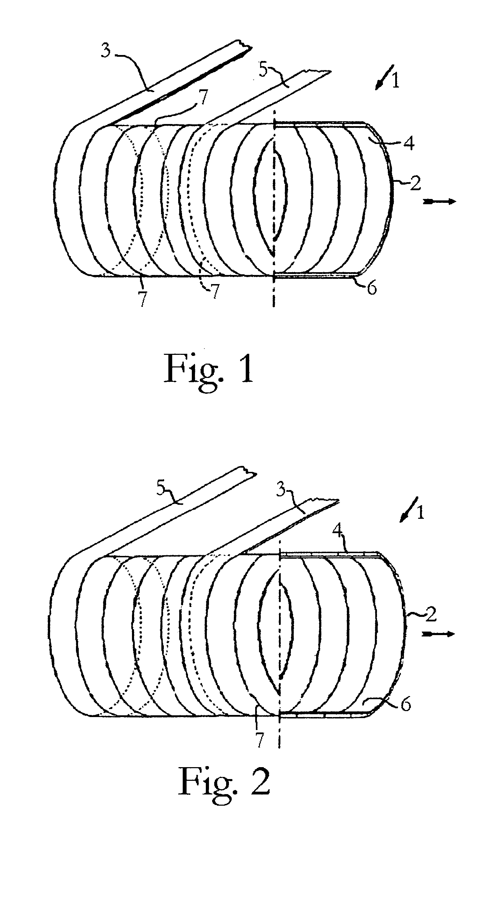

Fig. 32 zeigt in einer Darstellung entsprechend Fig. 1 die Herstellung einer Ausführung mit gelochtem Verbindungsmaterial insbesondere für Filterrohre;
Fig. 33 zeigt eine Alternative zur Ausführung von Fig. 32;

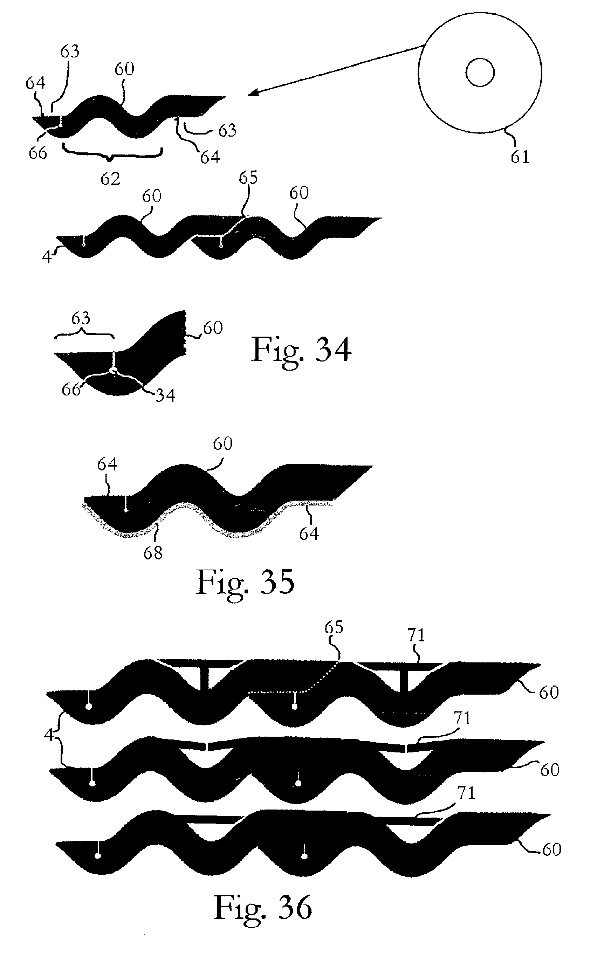

Fig. 34 zeigt Längsschnitte durch das Profil eines Streifens des Funktionsmaterials ohne Verbindungsschicht in zwei Herstellungs-Arbeitsphasen des Rohrkörpers;
Fig. 35 zeigt einen Längsschnitt durch eine Abwandlung der Ausführung von Fig. 34;
Fig. 36 zeigt drei weitere Abwandlungen, jeweils dargestellt anhand von Längsschnitten durch zwei aufeinanderfolgende Windungen;

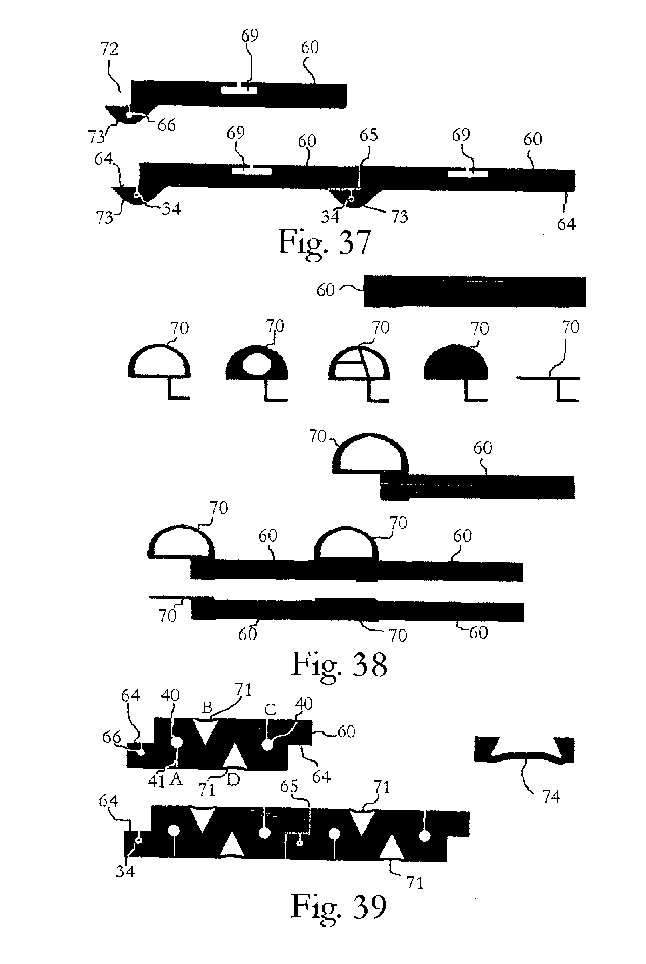

Fig. 37 zeigt eine weitere Abwandlung, dargestellt als Längsschnitte einer einzelnen und zweier verbundener Windungen;
Fig. 38 zeigt verschiedene Ausführungen von Verbindungskörpern in Kombination mit einem Funktionsmaterialstreifen;
Fig. 39 zeigt in einer Darstellung vergleichbar Fig. 37, Längsschnitte durch einen etwas komplexeren Funktionsmaterialstreifen;

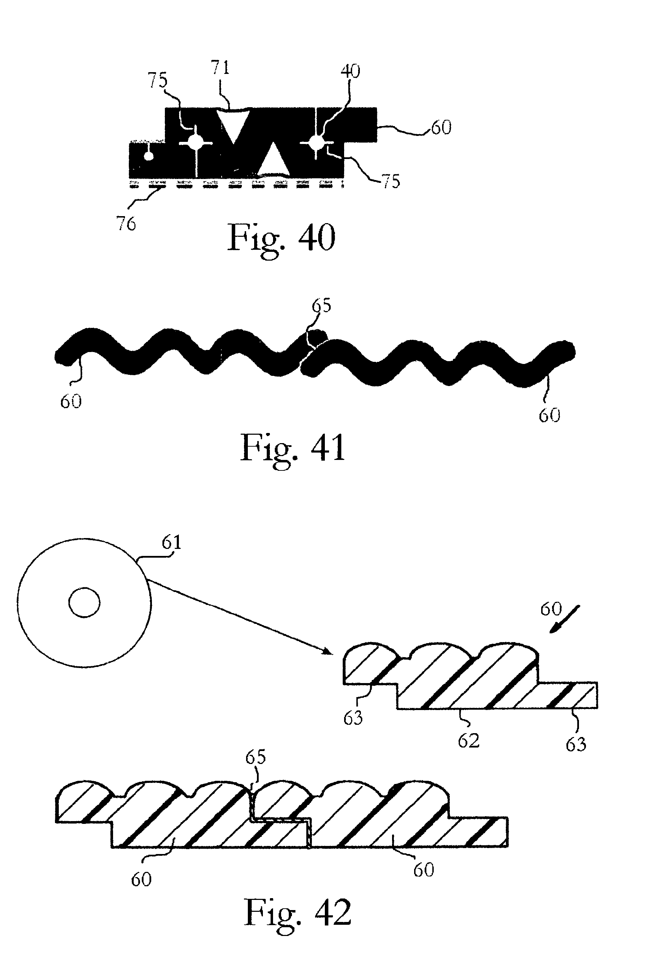

Fig. 40 zeigt in einem Längsschnitt eine Abwandlung des Funktionsmaterialstreifens von Fig. 39;
Fig. 41 zeigt als Längsschnitt durch die Schlauchwand von zwei Windungen eine weitere Abwandlung des Profils des Funktionsmaterialstreifens;
Fig. 42 zeigt in einer Darstellung vergleichbar Fig. 34 und 37, Längsschnitte durch einen modifizierten Funktionsmaterialstreifen;
Fig.n 43 bis 47 zeigen Schnittansichten von Funktionsmaterialstreifen mit abgewandeltem Profil und flexiblen Materialien;

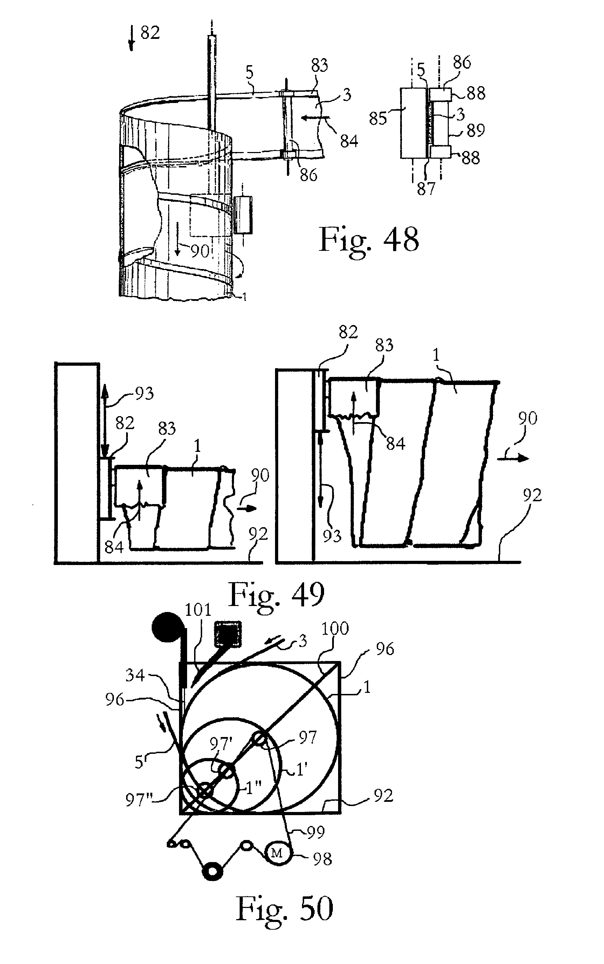

Fig. 48 zeigt eine schematische Draufsicht auf eine Vorrichtung zum Herstellen erfindungsgemäßer Rohrkörper, und einen Schnitt durch die Radialebene zweier zusammenwirkender Transportrollen in der Vorrichtung;
Fig. 49 zeigt schematische Seitenansichten der Rohrkörper-Herstellungsvorrichtung mit höhenverstellbarem Wickelkopf;
Fig. 50 zeigt in schematischer Vorderansicht eine Rohrkörper-Herstellungsvorrichtung.

Fig. 1 zeigt als Schema das Vorgehen beim Wickeln eines gewendelten Schlauchs. Vorrichtungen zum Herstellen gewendeter Schläuche sind an sich beispielsweise aus der europäischen Patentschrift 114613 oder, für zwei Wickelbahnen, aus der deutschen Offenlegungschrift 2113606 bekannt. Ihr prinzipieller Aufbau braucht deshalb hier nicht mehr beschrieben zu werden. Die Zeichnung zeigt als Rohrkörper, der gerade hergestellt wird, ein Stück Schlauch 1, das im linken Bildteil perspektivisch von außen und im rechten Bildteil in einer vertikalen senkrecht zur Zeichenebene liegenden Schnittebene und in einer parallel zur Zeichenebene liegenden Schnittebene geschnitten dargestellt ist und beim Wickeln in Pfeilrichtung wächst. Seine Wand ist mit 2 bezeichnet. Die Wand 2 des Schlauchs 1 ist zweischichtig und besteht aus einer Schicht aus einem Funktionsmaterial und einer Schicht aus einem Verbindungsmaterial. Als Funktionsmaterial wird von einer Art Vorratsrolle her ein bandförmiger Dämmstoff- oder Isoliermaterialstreifen 3 zugeführt, der dann in der Schlauchwand 2 eine Isoliermaterialschicht 4 bildet, und als Verbindungsmaterial wird von einer anderen Vorratsrolle her ein bandförmiges Klebefolienstreifen 5 zugeführt, der dann in der Schlauchwand 2 eine Folienschicht 6 bildet.

Der Isoliermaterialstreifen 3 wird so gewickelt, dass die Ränder der entstehenden Windungen entlang einer schraubenlinig umlaufenden Fugenlinie 7 aneinanderstoßen. Der Klebefolienstreifen 5 wird so zugeführt, dass er die Fugenlinie 7 überdeckt und beiderseits davon die Windungen des Isoliermaterialstreifens 3 verbindet, indem er beiderseits aufgeklebt wird. Das Aufbringen eines Klebers, wenn der Streifen 5 nicht bereits von sich aus klebt, auf eines oder beide der Materialien ist an sich bekannt und in der Zeichnung nicht dargestellt. Eine bei passender Materialzusammenstellung mögliche Alternative zum Kleben ist die Verschweißung z.B. mit Heißluft. Durch das beschriebene Verfahren entsteht der Schlauch 1 mit der zweischichtigen Schlauchwand 2, wobei die Isoliermaterialschicht 4 innen und die Folienschicht 6 außen liegen. Die Isoliermaterialschicht 4 bildet eine glatte Innenfläche des Schlauchs 1, entlang der das geführte Medium reibungsarm und ohne Geräuschentwicklung fließen kann.

Der Dämmstoff des Isoliermaterialstreifens 3 kann ein thermisch und/oder akustisch isolierendes Material sein. Beispielsweise kann es Hart- oder Weich-PVC, flexible Keramik, unbrennbares Glasmaterial, Silicon, Gummi, Silikat, Vitton, Filtermaterial, Filz oder Kautschuk sein, der Streifen kann auch gelocht sein. Bei Vitton oder sonstigem abriebfestem Gummi können im hergestellten Schlauch auch Gasströme, die Feststoffe wie Steine enthalten, geräuschisoliert transportiert werden. Das Verbindungsmaterial des Klebefolienstreifens 5 kann eine Kunststofffolie, ein textiles Band oder auch insbesondere ein Metallstreifen sein. Im Fall eines Metallstreifens kommen Kupferbänder, Messingbänder, Aluminiumbänder und sonstige Blechstreifen in Frage, insbesondere, wie später noch anhand von Beispielen gezeigt wird, in Form von längsgewelltem sogenanntem Wickelfalzmaterial.

Die Isoliermaterialschicht 4 kann innen, wie in Fig. 1 veranschaulicht ist, oder außen sitzen, wie Fig. 2 zeigt. Im Fall von Fig. 2 wird zuerst die Folienschicht 6 und dann auf dieser die Isoliermaterialschicht 4 gebildet.

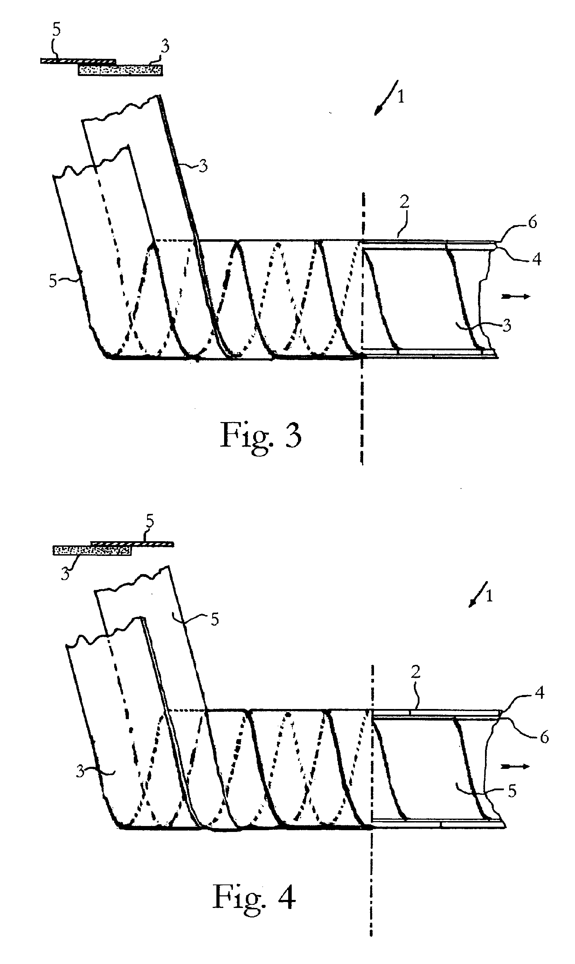

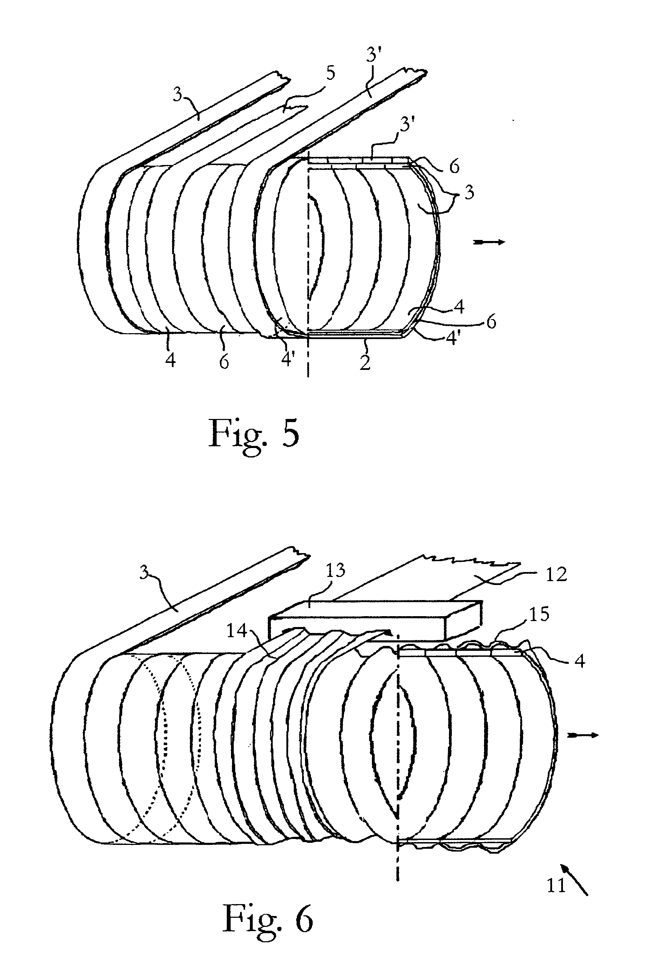

Der Isoliermaterialstreifen 3 und der Klebefolienstreifen 5 können auch bereits in miteinander verbundener Form vorgefertigt sein, wie die Figuren 3 und 4 veranschaulichen. Der kombinierte Streifen, der in diesen Figuren links oben auch als Querschnitt abgebildet ist, wird hierbei von einer einzigen Vorratsrolle abgezogen. Der Isoliermaterialstreifen 3 ist in dieser Querschnittsdarstellung, und auch in den meisten weiteren geschnittenen Abbildungen, mit einer Punktschraffur dargestellt. Fig. 3 zeigt die Herstellung eines Schlauchs mit innenliegender Isoliermaterialschicht 4 und Fig. 4 die Herstellung eines Schlauchs mit außenliegender Isoliermaterialschicht 4. Es ist auch möglich, einen Schlauch zu bilden, der sowohl innen als auch außen eine Isoliermaterialschicht aufweist. Fig. 5 veranschaulicht in vergleichbarer Darstellung zu Fig. 1 eine solche Schlauchherstellung bzw. einen solchen Schlauch, mit Isoliermaterialstreifen 3 und 3', die nacheinander unter Zwischenlage des Klebefolienstreifens 5 gewickelt werden und Schichten 4 bzw. 4' bilden.

Fig. 6 veranschaulicht, wiederum in vergleichbarer Darstellung, eine Herstellungsweise, bei der der Rohrkörper an Stelle eines Kunststoff-Klebefolienstreifens - beim dargestellten Beispiele außen - ein gewelltes Metallband hat, also ein Wickelfalzmaterial. Als Metall kommen beispielsweise Aluminium, Kupfer, Messing oder auch Edelstahl in Frage. Der hergestellte Rohrkörper stellt einen relativ steifen Schlauch oder auch bereits ein Rohr 11 dar, der bzw. das trotzdem zur Verlegung in gewissem Umfang biegbar ist. Der Metallstreifen wird als zunächst glattes Metallband 12 zugeführt und vor dem Erreichen der Wickelstation in einer Verformungvorrichtung 13 zum gewellten Wickelfalzmaterial 14 umgeformt, das dann einen Metall-Rohrmantel 15 bildet. Nach einer alternativen Herstellungsweise besteht das von einem Bandvorrat zugeführte Band bereits aus dem längsgewellten Material, oder auch aus dem längsgewellten Material, das bereits mit dem Verbindungsmaterial-Streifen beklebt ist. Auch für solche Wickelfalzrohre ist es möglich, die Isoliermaterialschicht 4 innen, außen oder sowohl innen als auch außen vorzusehen, wobei dann der Rohrmantel 15 in der Rohrwand außen bzw. innen bzw. in der Mitte zu liegen kommt.

Mit der beschriebene Technik ist es nicht nur möglich, kreiszylindrische Schläuche oder Rohre herzustellen, sondern es können auch, wie beim Stand der Technik für einschichtige Rohrwände, im Querschnitt rechteckige, elliptische oder in sonstiger Weise gestaltete Rohrkörper hergestellt werden, desgleichen Übergangsstücke beispielsweise von rundem auf viereckigen Kanal oder Umlenkstücke. Figur 7 veranschaulicht entsprechende Elemente, die in der beschriebenen Weise mit einer Isoliermaterialschicht und einer Folienschicht aufgebaut sind.

Fig. 8 veranschaulicht in fünf zeilenartig untereinander dargestellten aufeinanderfolgenden Schritten die Wickelfalzrohr-Herstellung in Anlehnung an das in Fig. 6 angedeutete Verfahren. Die Darstellung in Fig. 8 betrifft Querschnitte entsprechend dem in Fig. 6 unten dargestellten Querschnitt, also mit innen befindlicher Isoliermaterialschicht 4 und außen befindlichem Wickelfalz-Rohrmantel 15. Wie erwähnt, könnte die Isoliermaterialschicht 4 auch außen, oder sowohl innen als auch außen sitzen. Die Anordnung innen wird insbesondere in solchen Fällen bevorzugt, in denen außen eine unempfindliche Deckschicht, insbesondere aus Metall, vorhanden sein soll und das Dämmmaterial unmittelbar am transportierten Medium liegen soll, und auch bei angestrebter akustischer Abschirmung.

In Fig. 8 ist zuoberst im Querschnitt das noch ebene Metallband 12 dargestellt, darunter ist im Querschnitt das die Formungsvorrichtung 13 verlassende streifenförmige Wickelfalzmaterial 14 gezeigt, das in der nächsten Zeile mit Hilfe eines Klebers 17 mit dem phasenmäßig entsprechenden bereits gewickelten Isoliermaterialstreifen 3 verbunden ist. Die nächste Zeile zeigt im Querschnitt zwei aufeinanderfolgende Windungen, die jeweils einen Isoliermaterialstreifen 3, eine Schicht des Klebers 17 und eine Windung des Wickelfalzmaterials 14 umfassen. Das Wickelfalzmaterial ist im Bereich der Überlappung der Windungen in den Wellungen gleichphasig ineinandergreifend und hierdurch verklammert dargestellt. Die Windungen werden nun, wie die fünfte Zeile von Fig. 8 zeigt, im Überlappungsbereich unter Bildung einer Stauchzone 18 gestaucht, womit bei diesem dargestellten Beispiele die Verbindung der Windungen hergestellt ist. Die Wickelfalzmaterialstreifen 14 sind somit zum Rohrmantel 15 zusammengefügt. Die kleinen Luftpolster in den Wellungen ergeben einen zusätzlichen Dämmeffekt. Die einzelnen Isoliermaterialstreifen 3, die zusammen die Isoliermaterialschicht 4 bilden, sind in Fig. 8 mit Zwischenräumen 19, die hier die Fuge bilden, dargestellt, nach einer in dieser Figur nicht dargestellten Abwandlung können sie einander jedoch auch im gestauchten Zustand berühren, mit der Folge einer glatten, strömungswiderstandsarmen Innenfläche.

Das hergestellte Rohr soll in gewissem Umfang biegbar sein. Sofern die Isoliermaterialschicht 4 aus wenig komprimierbarem Material besteht, dienen die Zwischenräume 19 der Ermöglichung einer Biegung. Bei komprimierbarem oder dehnbarem Material kann die Isoliermaterialschicht die Kompressionen und Dehnungen aufnehmen. Das Verbindungsmaterial ist in vielen Fällen, z. B. bei Metallfolien, nur wenig dehnbar, so dass für die Biegsamkeit besondere Vorkehrungen erforderlich sind, wie eben z. B. Wickelfalzwellungen. Fig. 9 zeigt die Rohrwand 2 in gebogenem Zustand an der. Biegungsaußenseite, wobei der Biegewinkel etwas übertrieben dargestellt ist. Die Zwischenräume 19 verformen sich hierbei zu einer Trapez- oder Dreieck-Prismaform, und die Stauchzone 18 wird wieder etwas auseinandergezogen. Wenn das Isoliermaterial komprimierbar ist, ist die Biegung unter teilweiser Beibehaltung der glatten Innenfläche auch ohne die Zwischenräume 19 möglich, an der Biegungsaußenseite werden dann die Kanten der Windungen der Isoliermaterialschicht 4 etwas zusammengedrückt, an der Biegungsinnenseite allerdings gespreizt.

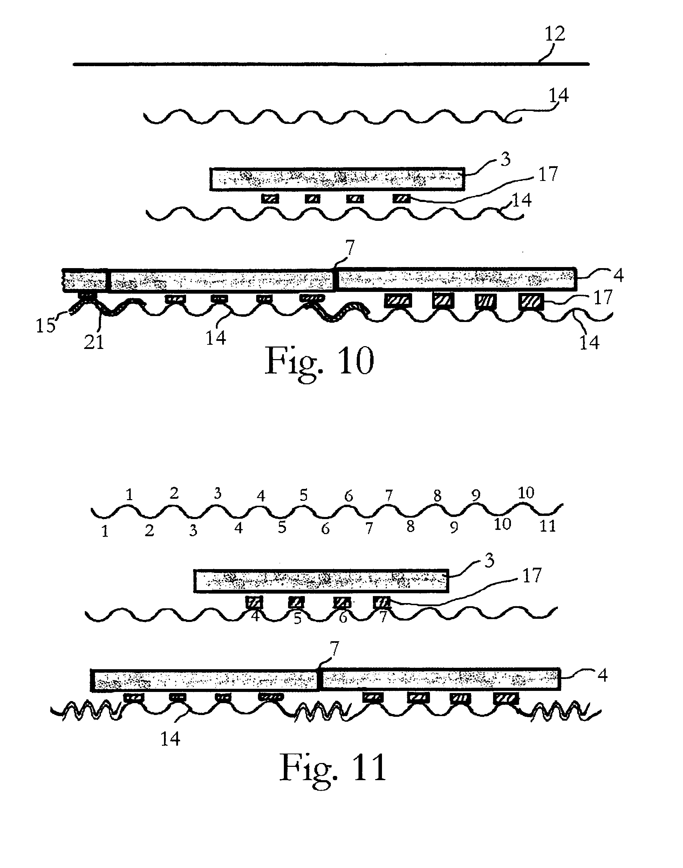

Fig. 10 zeigt eine ähnliche Folge von Zeilen wie in Fig. 8, hier sind es vier Zeilen, die die Verarbeitungsschritte schematisch darstellen, wobei ein abgewandeltes Verfahren zur Herstellung einer abgewandelten Schlauchausführung dargestellt ist. Der Kleber 17 ist hier nicht flächig, sonder punkt- oder linienförmig aufgebracht, und die Windungen des Wickelfalzmaterials 14 sind nicht durch Stauchung, sondern mit Hilfe eines weiteren Klebers 21, insbesondere eines Heißklebers, miteinander verbunden. Zur besseren Darstellung der verschiedenen Klebebereiche sind diese in der Zeichnung unterschiedlich gerichtet schraffiert.

Fig. 11 zeigt eine weitere Art der Windungsverbindung. Zugeführt wird das Wickelfalzmaterial 14 mit - im Querschnitt -zehn Wellenscheiteln und elf Wellentälern, die in der Figur mit ihrer jeweiligen Ordnungsnummer bezeichnet sind. An die Wellenscheitel Nr. 4, 5, 6 und 7 wird mit Hilfe des Klebers 17 der Isoliermaterialstreifen 3 geklebt, der beiderseits über diese Wellenscheitel übersteht. In diesen Spalt zwischen dem Streifen 3 und dem Material 14 dringt auf einer Seite , also bei den Scheiteln Nr. 1, 2 und 3, das Material 14 der benachbarten Windungen mit seinen Scheiteln Nr. 8, 9 und 10 ein und die Wellenscheitel und die Wellentäler greifen ineinander. Das Wickelfalzmaterial wird nun in den nicht geklebten Bereichen gestaucht, wodurch, wie in der Figur unten zu sehen ist, die Verbindung zwischen den Windungen festgemacht wird. Die Ränder der Windungen der Isoliermaterialschicht 4 berühren sich ohne Lücke dazwischen.

In den Figuren 12 bis 18 ist nur der schließliche Schlauchwandquerschnitt dargestellt, wobei sich die vorhergehenden Herstellungsschritte für den Fachmann auf Grund der bisherigen Beschreibung ergeben. Nach den Figuren 12 bis 16 erfolgt keine Stauchung, das Wickelfalzmaterial bleibt hier in Rohr-Längsrichtung in seiner ursprünglichen Längsschnitt-Form. Die Stellen, an denen das gewellte Metallband - geklebt oder nur formschlüssig verbunden - doppelt liegt, sind allerdings nur wenig biegbar, die Biegedehnungen konzentrieren sich bei solchen Windungsverbindungen auf die Bereiche dazwischen. Wird angenommen, dass bezogen auf Fig. 1 der dargestellte Längsschnitt der untere Wandschnitt ist, so zeigen die Fig.n 12 bis 17 Rohrkörper mit innenliegender und Fig. 18 einen Rohrkörper mit außenliegender Isoliermaterialschicht 4. Fig. 12 zeigt eine Schlauchausführung ähnlich Fig. 10, wobei jedoch der Ort der Verbindung der Windungen des Wickelfalzmaterials 14 nicht mit dem Ort der umlaufenden Fuge 7 der Windungen des Isoliermaterials übereinstimmt, sondern jeweils entlang dem wendelförmig umlaufenden Längsmittelbereich des Isoliermaterialstreifens 3 verläuft. Die biegesteiferen Bereiche liegen hier also im Abstand von den Windungsübergängen. Fig. 13 zeigt eine zusammenhängende Schicht des Klebers 17 und außerdem einander vollkommen überdeckende Überlappungsbereiche der Wickelfalzmaterialstreifen 14, die über ihre gesamte Breite mit dem Kleber 21 belegt sind. Diese Rohre eignen sich insbesondere für eine geradlinige Verlegung.

Fig. 15 zeigt eine Schlauchstruktur, bei der die Ränder 22 der Isolierstoffstreifen 3 parallel zueinander in einem Winkel zur Radialebene verlaufen, der beispielsweise im Bereich von 30 bis 60 Grad liegt. Fig. 15 zeigt einen Winkel von 45 °, dieser Winkel wird als das Optimum angesehen. Der Vorteil dieser Anschrägung liegt in der günstigen Biegsamkeit des Rohrkörpers bei gleichzeitiger glatter, unterbrechungsloser Oberfläche, insbesondere an der Innenseite. Bei einer Biegung des Rohrskörpers gleiten die schrägen Seitenflächen 22 der Windungen des Isoliermaterialstreifens 3 gegeneinander, und an der freien Fläche der Streifen 3, also im Verlauf ihrer gebogenen Isoliermaterialschicht 4, entsteht allenfalls jeweils eine kleine Stufe.

Fig. 16 zeigt einen eng gewickelten Rohrkörper, mit relativ schmalen Isoliermaterialstreifen 3 und Klebefolienstreifen des Wickelfalzmaterials 14, das hier nach außen - in der Zeichnung unten - drei Wellenscheitel hat. Fig. 17 zeigt eine Schlauchstruktur mit einer mehrlagigen Isoliermaterialschicht 4, die hier aus drei dick eingezeichneten Isolierstofflagen 4' besteht. Die Schichten können unterschiedliche Funktionen erfüllen, beispielsweise kann die innerste Schicht besonders abriebfest sein, die mittlere Schicht besonders gut dämmen und die äußerste Schicht besonders zerreißfest und gut verklebbar sein. Figur 18 veranschaulicht eine Struktur mit dem Kleber 17 zwischen der Schicht 4 und der aus breiten Streifen bestehenden glatten Folienschicht 6, und einem Kleber 23 im Zwischenraum zwischen den Windungen des Isoliermaterialstreifens 3, der also auf drei seiner Quader-Seitenflächen angeklebt ist.

Fig. 19 zeigt wiederum in einer Darstellungsweise entsprechend Fig. 8 in fünf aufeinanderfolgenden Zeichnungszeilen die Herstellung eines Rohrkörpers mit im Vergleich zu Fig. 8 verändertem Folienband, das in seinem Mittelbereich 25 aus einem nicht gewellten Streifen und in seinen beiden Randbereichen 26 bzw. 27 jeweils Wellungen aufweist, nämlich gemäß Fig. 19 am einen Randbereich 26 zwei Wellungen und am anderen Randbereich 27 eineinhalb Wellungen. Alternative Ausführungen weisen im Randbereich 26 drei Wellungen oder nur eine einzige Wellung auf. Während der Mittelbereich 25 dem Aufklebern des Isoliermaterialstreifens 3 dient, werden die gewellten Randbereiche 26 und 27 zum Verbinden der Windungen durch Stauchung bei 28 verwendet.

Fig. 20 zeigt die Herstellung einer Schlauchstruktur, bei der das Verbindungsmaterial aus einem Band 29 beispielsweise aus Metallfolie besteht, das jeweils in seinem Längsmittelbereich eine Sicke 30 aufweist. Auf der einen Seite des Bandes 29, entlang der Sicke 30, ist der Isoliermaterialstreifen 3 aufgeklebt, und die andere Seite des Streifens 29 dient der Verbindung mit der den Streifen 3 tragenden Seite der Nachbarwindung des Bands 29 mit Hilfe des Klebers 21 an der Bandunterseite. Die Sicke 30 wird dann in Längsrichtung zu einer Rippe 31 flachgestaucht, um den fertigen Rohrkörper zu ergeben. Fig. 21 deutet die Möglichkeiten der Biegung eines solchen Rohrkörpers an, was, wie die Figur zeigt, in beiden Biegerichtungen möglich ist. Die Rohrwand-Innenseite bleibt bei den Biegungen in beiden Richtungen weitgehend glatt und spaltfrei.

Es wurden einige Beispiele von Profilen der Folienstreifen 5 bzw. der Metallbänder 14 gezeigt, diese Reihe könnte jedoch noch verlängert werden, beispielsweise sind Bänder mit einer oder zwei längsverlaufenden Sicken in der Bandmitte, mit Aufbiegungen oder Sicken an den Rändern usw. möglich. Mit unterschiedlichen Bändern in unterschiedlichen Breiten kann man eine Vielzahl von Rohrkörpermodellen herstellen.

Die Figuren 22 bis 25 zeigen Möglichkeiten eines mechanischen Zusammenhalts der Schlauchwandschichten, der an Stelle der Klebung oder zusätzlich zu dieser vorgesehen werden kann. Das Verbindungsmaterial besteht hier aus einem Metallband 32, das jeweils in den Fugen zwischen den Windungen des Isoliermaterialstreifens 3 hindurchgeführt ist und an der Oberfläche dieser Windungen schraubenlinig umlaufende Umbiegungen 33 aufweist, die auf den freien Flächen des jeweiligen Streifens an dessen einem oder an beiden Seitenrändern ein Stück weit in dessen Querrichtung, also in Längsrichtung des Rohrkörpers, verlaufen. Fig. 22 zeigt zwei Möglichkeiten der Biegungsrichtung der Umbiegungen 33. Zum Verständnis der Zeichnung sei angemerkt, dass in den Figuren 22, 24, 25 und 26 die Metallbänder 32 als dicke Striche eingezeichnet sind und in Fig. 23 das Metallband 32, das hier eine etwas stärkere Ausführung hat, mit Schnittschraffur dargestellt ist. Zur Entlastung der Beschreibung wird hinsichtlich der verschiedenen beispielhaft vorgestellten Möglichkeiten dieser Verklammerung auf die Zeichnung verwiesen.

Insbesondere bei Schläuchen wird zu deren Versteifung häufig noch eine Drahtwendel mit eingebaut. Dies ist auch bei den erfindungsgemäßen Rohrkörpern möglich. Fig. 27 zeigt vor und nach der Stauchung des Verbindungsmaterials, nämlich des Folienstreifens 5, die Lage eines Drahts 34, der zwischen Randbereiche benachbarter Windungen des Folienstreifens 5 eingesetzt worden ist. Er befindet sich hier im Bereich der Fuge zwischen benachbarten Isolierstoffstreifen 3, wodurch die Biegbarkeit des Schlauchs erleichtert ist. Nach Fig. 28 ist der Draht 34 an den Außenseite der Folienstreifen 5, jedoch unter dem Randbereich des Folienstreifens 5 der benachbarten Windung eingesetzt. Am Ende dieses Randbereichs befindet sich eine Klebelinie 35. Fig. 29 zeigt eine ähnliche Konstruktion, jedoch ohne Stauchung des Verbindungsmaterials in der Fuge. Der Kleber 17 zwischen den Streifen 3 und 5 ist in diesen Figuren nicht mit dargestellt. Die Figur zeigt eine Ausführung mit relativ breiten freien Nuten 36 zwischen den Windungen der Isoliermaterialstreifen 3 zur Ermöglichung von Biegungen mit kleinem Radius, z. B. wenn der Schlauch auf einen Wickelkern aufgewickelt werden soll.

Der Streifen des Funktionsmaterials kann auch ein Profilstreifen 37 sein, mit oder ohne Isoliermaterialeigenschaft. Von besonderer Bedeutung ist dieser Ausführung allerdings dann, wenn das Funktionsmaterial zugleich ein Profilmaterial und ein Isoliermaterial ist. Als Beispiel zeigt Fig. 30 Windungen eines Profilstreifens an der Schlauch-Außenseite, der die Querschnittsform eines flachen U hat. In der Nut des U-Profils sind elektrische Leiter 38 eingebaut, die elektrische Verbindungen entlang der Schlaucherstreckung bilden. Wenn der Schlauch beispielsweise in 5 m langen Teilstücken ausgeliefert wird, werden die elektrischen Leiter 38 an den Übergängen zwischen den Teilstücken durch Stecker miteinander verbunden. Die elektrischen Leiter 38 können beispielsweise Heizleiter sein, die das hindurchströmende Medium erwärmen oder warm halten, sie können Leitungen zur Energielieferung an am Leitungsende liegende Aggregate sein, sie können Nachrichtenkabel sein oder sie können Messleiter z.B. zur Messung der Bedingungen im Rohr oder Schlauch sein.

Die Fig. 31 zeigt verschiedene Beispiele für unterschiedliche Profilstreifen 37, die teilweise auch schon in der bisherigen Beschreibung und Zeichnung erschienen sind. Von Bedeutung sind beispielsweise Profilstreifen mit Einklickprofilen 39, Kabelkanälen 40 oder auch Durchlässen 41 für den Gasdurchtritt, etwa für Filterrohre. Der letzte dargestellte Profilstreifen weist entlang seinen Rändern Dichtungslippen 42 auf.

Fig. 32 zeigt noch, in einer Darstellung entsprechend Fig. 1, die Herstellung eines Filterrohrs mit einem gelochten Klebefolienstreifen 48, der beim dargestellten Beispiel in Längsrichtung eine Reihe, bei abgewandelten Ausführungen auch mehrere Reihen oder in anderer Anordnung, von Löchern 49 aufweist, und bei dem das Funktionsmaterial ein Filtermaterialstreifen 50 ist, der gegebenenfalls auch noch zugleich Dämmungseigenschaften hat. Das hergestellte Rohr gibt gefilterte Luft ab.

Fig. 33 zeigt ebenfalls die Herstellung eines Filterrohrs, wobei jedoch die Durchtrittslöcher in der Klebefolienschicht 6 dadurch hergestellt sind, dass ein Klebefolienstreifen 55 unterschiedlicher Breite, also mit in Abständen an den Rändern - alternativ auch nur an einem der Ränder - befindlichen Einkerbungen, die in der Klebefolienschicht 6 freie Zwischenräume 56 ergeben, verarbeitet wird.

In den Figuren 34 bis 47 sind erfindungsgemäße Isoliermaterialstreifen 60, und zwar hinsichtlich der Längserstreckung der Streifen Querschnitte und hinsichtlich der Längserstreckung des Rohrkörpers Längsschnitte durch Isoliermaterialien dargestellt, die ohne spezielle Verbindungsschicht durch Verklebung oder Verschweißen, insbesondere Heißluftverschweißen, unmittelbar Windung an Windung miteinander verbunden sind. Rohrkörper aus in der dargestellten Weise profilierten Isoliermaterialstreifen sind im Stand der Technik unbekannt und werden als erfindungswesentlich offenbart beansprucht.

Fig. 34 zeigt den Isoliermaterialstreifen 60, der von einer Vorratsrolle 61 abgezogen wird. Er besteht längsverlaufend aus einem Mittelteil 62 in Form eines Wellenbereichs und in seinen Seitenbereichen aus Überlappungsrändern 63. Die Überlappungsränder 63 weisen entgegengesetzt gerichtete Verbindungsflächen 64 auf, die bei der in Fig. 34 in der Mitte dargestellten Windungsverbindung im Rohrkörper an einer Schweißfläche 65 zusammengeschweißt sind, wie dort durch eine feine weiße Linie veranschaulicht ist. Das gewellte Material ist so flexibel, dass im Fall einer Biegung des Rohrkörpers die Biegungsaußenseite gestreckt und die Biegungsinnenseite gestaucht werden. Der Isoliermaterialstreifen 60 enthält auch einen Drahteinlegekanal 66 mit einem schmalen Einziehschlitz für das Einlegen des versteifenden Drahts 34, wie in vergrößertem Maßstab in Fig. 34 unten dargestellt ist. Der Draht 34 kann größenordnungsmäßig ein Stahldraht von 1,5 mm Durchmesser sein. Der Drahteinlegekanal 66 kann beim Spritzguss des Isoliermaterialstreifens 60. gleich mitgeformt werden, durch einen entsprechenden Kern im Spritzwerkzeug. In gleicher Weise sind auch später noch beschriebene sonstige Kanäle, die sich in Längsrichtung durch den Isoliermaterialstreifen ziehen, herstellbar.

Fig. 35 zeigt eine Modifikation des Isoliermaterialstreifens 60 dahingehend, dass er auf der einen Seite mit einem Folienbelag 68 aus PVC oder Aluminium beklebt ist.

Für ein möglichst laminares Fließen des transportierten Mediums im Rohrkörper ist es erwünscht, dass dessen Innenfläche nur wenig turbulenzerzeugende Formunstetigkeiten hat. wie sie durch gewelltes Material gebildet werden. Die Fig. 36 zeigt drei unterschiedliche Beispiele, wie die Isoliermaterialstreifen 60 durch zusätzliche Materiallappen 71 ergänzt sein können, die die Dehnbarkeit bzw. Stauchbarkeit nicht beseitigen, jedoch eine verbesserte Stetigkeit der Rohrkörper-Innenfläche ergeben. Die Materiallappen 71 überdecken jeweils die im Rohrkörper innenliegenden Wellentäler, sind jedoch an den Isoliermaterialstreifen 60 so angegossen, dass die Wellentäler trotzdem gespreizt oder zusammengedrückt werden können. Dies ist dadurch ermöglicht, dass sie nur mit jeweils einem Rand am Streifen 60 angegossen sind, so dass die anderen Ränder sich von der Berührung mit dem Streifen 60 lösen bzw. an ihm oder an einem anderen Materiallappenrand gleiten können. Es ist noch darauf hinzuweisen, dass in Fig. 36 jeweils zwei miteinander verbundene Windungen des Isoliermaterialstreifens 60 vom im Rohrkörper-Längsschnitt unteren Rand, also mit obenliegender Rohrkörper-Innenseite, dargestellt sind. Die Schweißfläche 65 ist nur zwischen den zuoberst dargestellten Streifenwindungen eingezeichnet.

Fig. 37 zeigt wiederum als Einzel-Querschnitt des Streifens und als Rohrkörper-Längsschnitt mit zwei Windungsquerschnitten ein abgewandeltes Isoliermaterial, das eine erhöhte Flexibilität aufweist und deshalb auch ohne Wellenprofil biegsam ist, allerdings zur Versteifung den Draht 34 benötigt. Der Isoliermaterialstreifen 60 von Fig. 37 weist als erste Abwandlung eine Kondenswasserrinne 69 und als zweiten Abwandlung beiderseits Überlappungsränder auf, von denen jedoch nur einer, der mit 72 bezeichnet ist, sich vom übrigen Querschnitt des Streifens 60 unterscheidet. Er umfasst einen längsverlaufenden Wulst 73, der vom Streifen 60 entlang von dessen in der Zeichnung linkem Rand nach - in der Zeichnung - unten bzw. - hinsichtlich des Rohrkörpers - nach außen absteht und als mit der Unterfläche (Außenfläche) des Streifens 60 fluchtende Oberseite eine der Verbindungsflächen 64 aufweist, der zur Bildung der Schweißfläche 65 der gegenüberliegende seitliche Randstreifen der Unterseite des Streifens 60, also die dortige Verbindungsfläche 64, entspricht. Der Wulst 73 enthält auch den Drahteinlegekanal 66. Die Kondenswasserrinne 69 ist an sich von der Ausbildung der Überlappungsränder unabhängig, sie kann auch bei den anderen Funktionsmaterial-Profilen erscheinen. Sie ist in Form eines Längskanals im Isoliermaterialstreifen in dessen Längsrichtung eingearbeitet und über einen schmalen Spalt mit der Streifenfläche, die im fertigen Rohrkörper innen zu liegen kommt, verbunden. Sie dient im gewickelten Rohrkörper dem Sammeln von Kondenswasser, das hierdurch nicht im eventuell geneigt verlegten Rohrkörper nach unten fließt und sich dann unten zu einer größeren Menge sammelt, sondern in der Windung bleibt, wo es wieder verdunsten soll.

In nicht dargestellter Weise kann das Rohrstück nach Fig. 37 noch dadurch modifiziert werden, dass mit Hilfe einer Zweifachspritzung anstelle des Kanals 66 mit dem Draht 34 ein dort eingebauter harter Strang gebildet wird, oder es kann auch der gesamte Wulst 73 aus HartKunststoff bestehen. Zusätzlich kann auch noch am anderen Ende ein harter Strang mit eingespritzt werden. Diese Maßnahmen ermöglichen es, den Draht 34 wegzulassen, was zu einer rationelleren Fertigung führt. Als nicht separat dargestellte weitere Variante kann der Streifen 60 unabhängig von der Art der Verbindung der umlaufenden Streifenränder aus zwei nebeneinander aufgewickelten Streifen unterschiedlichen Materials bestehen, insbesondere einem weichen Dämmmaterial und einem härteren, versteifenden Material, die als Funktionsmaterial dienen. Auch bei dieser Anordnung wird der versteifende Draht überflüssig.

Fig. 38 veranschaulicht eine Abwandlungsmöglichkeit dahingehend, dass der Isoliermaterialstreifen 60 selbst ohne den Wulst 73 hergestellt ist, ihm jedoch ein Aufsteck-Profilrand 70 aufgesteckt und mit ihm verbunden ist. Es sind verschiedene Möglichkeiten für solche Aufsteck-Profilränder 70 dargestellt, nämlich mit Hohlprofil, mit einem darin längsverlaufenden beispielsweise luftgefüllten Kanal, mit inneren elastischen Stegen, mit Vollprofil oder mit einem reinen Steckstreifen. In der Mitte ist dargestellt, wie der Aufsteck-Hohlprofilrand auf den Rand des Streifens aufgezogen ist, und darunter, wie dann eine durch Klebung erfolgte Windungsverbindung aussieht. Als unterste Darstellung in Fig. 38 ist die Windungsverbindung bei Verwendung der reinen Steckstreifen gezeigt.

Fig. 39 zeigt eine Abwandlung des Wellenprofils von Fig. 34 in Form eines Zickzack-Profils. Der Isoliermaterialstreifen 60 von Fig. 39 weist wiederum Verbindungsflächen 64 zum Bilden der Schweißfläche 65 auf, außerdem den Drahteinlegekanal 66 und weiterhin als Kabelkanäle 40 verwendbare Längskanäle mit den entsprechenden Durchlässen 41. Außerdem zeigt das Profil die auch bei den Isoliermaterialstreifen 60 von Fig. 36 angeformten Materiallappen 71, und zwar beiderseits zur Überdeckung der durch das Zickzack gebildeten Dreiecknuten. Dieser Isoliermaterialstreifen ergibt deshalb beiderseits eine weitgehend glatte Oberfläche der Rohrkörperwandung und ist deshalb in dieser Hinsicht nicht auf die Außenseite oder Innenseite festgelegt. Die Materiallappen 71 müssen nicht angeformt sein, sondern können auch, wie in Fig. 39 seitlich in vergrößertem Maßstab dargestellt ist, beispielsweise 5 oder 10 mm breite klammerartige Einsteckfedern 74 sein, die in Abständen entlang den V-förmigen Nuten in diese eingesetzt sind, einen wie dargestellt konkaven Federrücken haben und mit seitlichen Flanschen eine leichte Spreizwirkung auf das umgebende Material ausüben, jedoch von den Flanschen her zusammendrückbar sind.. Die Durchlässe 41 und die Kabelkanäle 40 sind von beiden Seiten her eingeschnitten und ergeben deshalb ebenfalls eine Seiteunabhängigkeit und außerdem zusätzlich eine erleichterte Biegsamkeit. Zur weiter verbesserten Seiteunabhängigkeit kann zusätzlich noch am anderen Rand des Streifens 60 ein weiterer Drahteinlegekanal vorgesehen sein.

In Fig. 39 sind bei der Abbildung des Isoliermaterialstreifens 60 Buchstaben A, B, C und D an bestimmten Punkten eingetragen. Bei einer Biegung des Streifens nach oben wird das Material bei A auseinandergespreizt und bei B zusammengedrückt, während C und D unverändert bleiben, also keine Funktion ausüben. Bei einer Biegung nach unten wird das Material bei C auseinandergespreizt und bei D zusammengedrückt, während A und B keine Funktion haben.

Fig. 40 zeigt eine Weiterbildung des Ausführungsbeispiels von Fig. 39 dahingehend, dass einerseits an den Kabelkanälen 40 noch zusätzliche Dehnungsschnitte 75 angebracht sind und außerdem noch eine gestrichelt eingezeichnete Folie 76 aus PVC oder Aluminium aufgeklebt ist, was speziell für starre Rohre erwünscht sein kann.

Fig. 41 zeigt zwei miteinander verbundene, im Querschnitt wellenförmige Isoliermaterialstreifen 60, die keine speziell geformten Überlappungsränder 63 aufweisen, sondern nur an ihren randseitigen Wellenbereichen miteinander verschweißt sind. Das Isoliermaterial dieses Streifens 60 ist ein für die Heißluftverschweißung geeignetes Material.

Gemäß einer in Fig. 42 dargestellten Ausbildung ist das Profil des Isoliermaterialstreifens 60 auf einer Streifen-Hauptfläche ein Wellenprofil und auf der anderen, im Rohrkörper vorzugsweise innen zu liegenden Hauptfläche eine glatte, ebene, im Rohrkörper zylindrische Fläche, ist also dort nicht profiliert. Diese erfindungsgemäße Profilierung des Isoliermaterialstreifens 60 umfasst den Mittelteil 62 und die Überlappungsränder 63 in der dargestellten Weise und eine glatte und eine gewellte Oberfläche sowie eine Stufenstruktur für die Windungsverbindung. Diese ist als Schweißfläche 65 dargestellt, es könnte auch eine Klebeverbindung sein. Die Wellung der einen Oberfläche verläuft, wie beim Wickelfalzmaterial, in der Längsrichtung des Streifens und somit in einer Schraubenlinienrichtung des Rohrkörpers, und überdeckt auch einen der Überlappungsränder 63 so, dass beim fertigen Rohrkörper die Wellung die eine Rohrwandfläche vollständig füllt. Das Material des Streifens 60 ist ein elastischer, biegsamer wärme- und schallisolierender Kunststoff, der entstehende Rohrkörper kann wahlweise mit der gewellten Fläche innen oder außen gewickelt werden. Die Herstellung des Streifens 60 und des resutierenden Rohrkörpers kann nach dieser Ausführungsform relativ einfach realisiert werden.

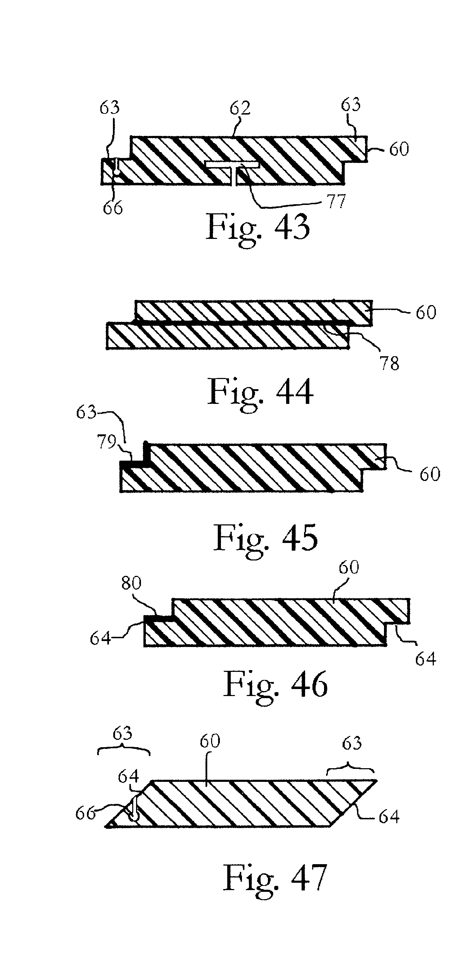

Das Material der Isolierstoffstreifen 60 nach den Figuren 43 bis 47 ist wiederum ein in sich biegsames Isolierstoffmaterial, es benötigt für eine Biegung des Rohrkörpers keine spezielle Formgebung. Der Streifen 60 von Fig. 43 besteht aus dem Mittelteil 62 und den Überlappungsrändern 63 in der dargestellten Weise, wobei im Mittelteil noch ein Rohrhalterungskanal 77 und in einem der Überlappungsränder noch der Drahteinlegekanal 66 eingeformt sind. Mit Hilfe des Rohrhalterungskanals 77 können Aufhängeinstallationen am Rohr oder Schlauch befestigt werden.

Fig. 44 zeigt eine vergleichbare Gesamtkonfiguration, bei der jedoch ein Aluminiumband 78 eingebaut, nämlich zwischen zwei halbe Streifen eingeklebt oder eingeschweißt ist. Diese Ausbildung erweist sich für die Herstellung isolierender Rechteckkanäle als vorteilhaft, da durch das Band 78 die Form des Kanalquerschnitts stabilisiert ist. Nach Fig. 45 ist in den Winkel eines der Überlappungsränder 63 ein Aluminium-Winkelband 79 eingeklebt, nach Fig. 46 ist ein Aluminiumband 80 auf eine der Verbindungsflächen 64 geklebt oder geschweißt. Durch diese Ausbildung des Streifens muss kein Draht mehr in den Schlauch eingearbeitet werden, was den Wickelvorgang beschleunigt. Der Isoliermaterialstreifen 60 von Fig. 47, schließlich, weist in gleichem Winkel schräge Verbindungsflächen 64 an seinen Überlappungsrändern 63 auf, an denen die benachbarten Windungen zusammengeschweißt werden.

Gewendelte Rohrkörper werden auf Maschinen hergestellt, die einen Wickelkopf aufweisen, dem der Streifen oder die Streifen zugeführt werden. Fig. 48 zeigt schematisch ein Beispiel einer Wickelvorrichtung zur Herstellung eines erfindungsgemäßen Rohrkörpers aus zwei Materialstreifen, die einem Wickelkopf 82 in bereits verbundener Form, beispielsweise mit einem breiteren Streifen der Verbindungsschicht, dem ein schmaler der Streifen des Funktionsmaterials aufgeklebt ist, in Form eines verbundenen Streifens 83 in Richtung eines Pfeils 84 zugeführt werden. Der verbundene Streifen 83 besteht aus dem Isoliermaterialstreifen 3 und dem Verbindungsmaterialstreifen 5 und wird über Transportrollen 85 und 86 zugeführt, die zwischen sich einen Spalt 87 bilden. Um im Spalt 87 dem Isoliermaterialstreifen 3 ausreichend Platz zu gewähren, und an den Rändern am Verbindungsmaterialstreifen 5 anzugreifen, weist die Transportrolle 86 ein Stufenprofil auf, mit Teilen 88 größeren Durchmessers an den Enden und einem Teil 89 verminderten Durchmessers, dessen Länge der Breite des Streifens 3 entspricht, in ihrem Mittelteil. Der verbundene Streifens 83 kann hierdurch sauber geführt und transportiert werden. Der Pfeil 90 zeigt die Wachstumsrichtung des Rohrkörpers 1 an.

Fig. 49 zeigt noch eine Besonderheit der Maschine, nämlich die Tatsache, dass der Wickelkopf 82 über einer Basis 92 höhenverstellbar ist, wie durch Doppelpfeile 93 veranschaulicht ist. In der Figur ist links das Wickeln eines Rohrkörpers eines kleineren Durchmesser, und rechts das Wickeln eines Rohrkörpers eines größeren Durchmessers dargestellt, wobei der Wickelkopf 82 für die jeweilige Schlauchdimension auf eine andere Höhe eingestellt ist. Die Pfeile 84 und 90 zeigen wiederum einerseits die Zuführbewegung des Streifens 83 und andererseits die Wachstumsrichtung des Rohrkörpers 1 an.

Das Schema von Fig. 50 zeigt eine Herstellungsvorrichtung mit einem auf der Basis aufbauenden Rahmen 96 und mit darin dargestellten, in der Herstellung begriffenen Schläuchen 1, 1' und 1" unterschiedlichen Durchmessers, die beim Wickeln auf der Basis 92 rotierend gleiten. Es ist klar, dass zu einer Zeit nur eine Schlauchgröße hergestellt werden kann, die gleichzeitige Darstellung der drei Schläuche veranschaulicht nur die verschiedenen Möglichkeiten. Die Wickelköpfe für die Schlauchherstellungen haben jeweils ein Drehzentrum 97, 97' bzw. 97", das dargestellt ist als von einem Motor 98 über eine Kette oder einen Riemen angetriebene Kettenrad- oder Riemenscheibe. Die Drehzentren 97, 97' und 97" liegen auf einer Linie 100, die zum Rahmen und damit im Wesentlichen zur Horizontalen und zur Vertikalen einen Winkel von 45° einnimmt. Es sind die Konstruktionsdetails möglich, dass das angetriebene Rotationszentrum auf dieser Linie 100 auf und abfahrbar und am jeweiligen Arbeitsort festlegbar ist, worauf der Wickelkopf aufgesteckt wird, oder dass eine Anzahl von Aufsteckinstallationen fest installiert ist, gegebenenfalls jeweils mit eigenem Antriebsmotor, und der Wickelkopf auf die betreffende Installation aufmontiert wird. Die Zeichnung zeigt eine verstellbare Kettenrad- oder Riemenscheibe mit sich an ihre Position anpassendem Antriebssystem.

Der hergestellte Rohrkörper könnte der von Fig. 25 sein, es sind die Zuführung des Isoliermaterialstreifens 3 und des Klebefolienstreifens 5 sowie des Drahts 34 dargestellt, außerdem eine Klebstoffdüse 101, die den Klebstoff für die Verbindung der Streifen aufspritzt. Die Verstellbarkeit des Drehzentrums 97 entlang der 45°-Linie 100 bietet nun den Vorteil, dass die Drahteinführung und die Klebstoffdüse für die verschiedenen Schlauchdurchmesser örtlich unverändert gelassen werden können, so dass die entsprechenden durchaus großen und schweren Installationen nicht jeweils angepasst werden müssen. Allenfalls können eine Verlängerung der Düse oder eine ergänzende Drahtführung von Nutzen sein.

## Patentansprüche

1. Rohrkörper (1) mit mehrschichtiger Rohrwand (2), die mindestens eine Schicht (4) aus einem Funktionsmaterial und mindestens eine Verbindungsschicht (6) enthält und die aus gewendelten, in in Längsrichtung des Rohrkörpers aufeinanderfolgen Windungen umlaufenden Streifen (3,5,14,37,48,50,55) besteht, wobei sich die wendelförmig verlaufenden Streifenränder benachbarter Windungen des Funktionsmaterials unter Bildung einer gewendelten Fuge (7) gegenüberliegen und von zumindest einem Teil der Windungen der Verbindungsschicht überdeckt sind, die jeweils mit den beiderseits der Fuge liegenden Windungen des Funktionsmaterials flächig verbunden sind, **dadurch gekennzeichnet, dass** das Funktionsmaterial ein thermisch und/oder akustisch dämmendes Isoliermaterial ist

2. Rohrkörper (1) nach Anspruch 1, **dadurch gekennzeichnet, dass** das Funktionsmaterial und das Material der Verbindungsschicht durch ein beide Funktionen erfüllendes Material (60) zusammengefasst sind.

3. Rohrkörper (1) nach Anspruch 1 oder 2, **dadurch gekennzeichnet, dass** das Funktionsmaterial wenigstens einen in der Längsrichtung der Streifen (37) eingebauten elektrischen Leiter (38) enthält.

4. Rohrkörper nach einem der Ansprüche 1 bis 3, **dadurch gekennzeichnet, dass** die Streifen (3,37,60) des Funktionsmaterials im Querschnitt ein Profil aufweisen.

5. Rohrstück nach Anspruch 4, **dadurch gekennzeichnet, dass** an den Streifenrändern (63) beiderseits komplementäre Verbindungsprofile (64) vorhanden sind und die Verbindungsprofile benachbarter Windungen des Funktionsmaterials miteinander verklebt oder verschweißt sind.

6. Rohrstück nach Anspruch 4 oder 5, **dadurch gekennzeichnet, dass** im Funktionsmaterial wenigstens ein in der Längsrichtung der Streifen (60) verlaufender Kanal (40,66,69,77) ausgebildet ist.

7. Rohrstück nach Anspruch 6, **dadurch gekennzeichnet, dass** in den Kanal (66) ein Draht (34) eingelegt ist und der Kanal über seine gesamte Länge über eine Nut mit einer der Hauptflächen des Funktionsmaterialstreifens (60) verbunden ist.

8. Rohrkörper nach einem der Ansprüche 1 bis 7, **dadurch gekennzeichnet, dass** Streifenränder benachbarter Windungen des Funktionsmaterials unter Bildung der gewendelten Fuge (7) gegenüberliegen und die Windungen der Streifen (3,37,50) des Funktionsmaterials an der Fuge (7) sich unter einem Winkel berührend aneinanderliegen.

9. Rohrkörper nach einem der Ansprüche 1 bis 8, **dadurch gekennzeichnet, dass** die Fugen (7) zwischen den Windungen der Streifen (3,37,50) des Funktionsmaterials Nuten (36) bilden, indem die Streifenränder bei gerader Ausrichtung des Rohrkörpers im Abstand voneinander angeordnet sind.

10. Rohrkörper nach einem der Ansprüche 1 bis 9, **dadurch gekennzeichnet, dass** in die Fugen (7) zwischen den Windungen der Streifen (3,37,50) des Funktionsmaterials Falten (28,31) der Streifen (5,14,48,55) des Verbindungsmaterials hineinragen.

11. Rohrkörper nach einem der Ansprüche 1 bis 10, **dadurch gekennzeichnet, dass** die Verbindungsschicht (6) aus einem gewellten Wickelfalzmaterial (14) besteht.

12. Rohrkörper nach einem der Ansprüche 1 bis 11, **dadurch gekennzeichnet, dass** in der außen befindlichen Verbindungsschicht (48) Durchtrittslöcher (49) ausgebildet sind.

13. Rohrkörper nach einem der Ansprüche 1 bis 12, **dadurch gekennzeichnet, dass** die Windungen der Verbindungsschicht (55) zumindest bereichsweise mit gegenseitigem Abstand unter Bildung von Durchtrittsbereichen (56) angeordnet sind.

14. Rohrkörper nach einem der Ansprüche 1 bis 13**, dadurch gekennzeichnet, dass** die Schicht aus dem Funktionsmaterial aus wenigstens zwei getrennte Streifen aus unterschiedlichen Funktionsmaterialien, insbesondere Materialien unterschiedlicher Härte und Steifigkeit, besteht, die in abwechselnden Windungen liegend mit der Verbindungsschicht verbunden sind.

15. Verfahren zum Herstellen des Rohrkörpers nach einem der Ansprüche 1 bis 14, **dadurch gekennzeichnet, dass** die Rohrkörper im Wickelverfahren so hergestellt werden, dass die Materialstreifen in einer Wickelstation an Stellen des sich bildenden Wickelkörpers zugeführt und als zwei- oder mehrlagige Rohrkörperwand Windung an Windung und Schicht über Schicht zusammengefügt werden, wobei sie jeweils einen wendelförmigen Verlauf annehmen.

16. Vorrichtung zum Herstellen des Rohrkörpers nach einem der Ansprüche 1 bis 14, mit einem Wickelkopf (82), dem die streifenförmigen Materialien (83) zugeführt werden und der sie in Windungen legt und die Windungen verbindet, **dadurch gekennzeichnet, dass** im Zuführbereich zum Wickelkopf (82) zusammenwirkende parallelachsige Transportrollen (86) angeordnet sind, durch deren Spalt (87) die streifenförmigen Materialien (83) laufen, und dass die Transportrollen ein dem Profil der streifenförmigen Materialien angepasstes Rollenprofil aufweisen.

17. Vorrichtung nach Anspruch 16, **dadurch gekennzeichnet, dass** die Vorrichtung einen Vorrichtungsrahmen (96) aufweist und der Wickelkopf (82) in seiner Höhe über einer Basis (92) verstellbar ist, indem er ein Drehzentrum (97) hat, das entlang einer Linie (100), die unter 45° zum Rahmen nach oben verläuft, in wählbarer Position festlegbar ist.
